(19) Europäisches Patentamt
European Patent Office
Office européen des brevets

(11) EP 4 496 043 A1

(12) **EUROPEAN PATENT APPLICATION**
published in accordance with Art. 153(4) EPC

(43) Date of publication:
**22.01.2025 Bulletin 2025/04**

(21) Application number: **23869391.5**

(22) Date of filing: **29.05.2023**

(51) International Patent Classification (IPC):
***H01M 4/66*** *(2006.01)*

(86) International application number:
**PCT/CN2023/096874**

(87) International publication number:
**WO 2024/243774 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Central And Western District (HK)**

(72) Inventors:
- **LIU, Xin**
  **Ningde, Fujian 352100 (CN)**
- **LIU, Xianghui**
  **Ningde, Fujian 352100 (CN)**
- **HUANG, Qisen**
  **Ningde, Fujian 352100 (CN)**
- **LI, Mingling**
  **Ningde, Fujian 352100 (CN)**
- **LI, Cheng**
  **Ningde, Fujian 352100 (CN)**

(74) Representative: **Gong, Jinping**
**CocreateIP**
**Neumarkterstr. 21**
**81673 München (DE)**

# (54) COMPOSITE CURRENT COLLECTOR USED FOR POSITIVE ELECTRODE, POSITIVE POLE PIECE, SECONDARY BATTERY, AND ELECTRICAL APPARATUS

(57) This application provides a composite current collector for positive electrode including a support layer and a conductive layer disposed on at least one side of the support layer. The support layer is an organic support layer. The support layer has a thickness d1, a tensile strength at break T1, a yield strength Q1, and an elastic modulus G1; the conductive layer has a total thickness d2, a tensile strength at break T2, and an elastic modulus G2; and the composite current collector for positive electrode satisfies the following condition: $(d1 \times T1 - (d2 \times T2) \times (1 - \alpha) - d1 \times Q1 \times \alpha) \geq 800\ Pa \cdot m$, where $\alpha = G1/(G1 + G2)$.

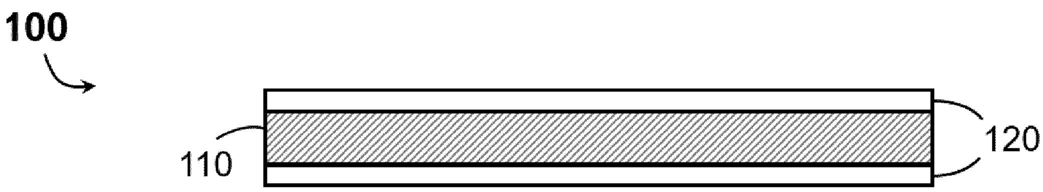


FIG. 1

EP 4 496 043 A1

## Description

### TECHNICAL FIELD

This application relates to the field of secondary battery technologies, and in particular, to a composite current collector for positive electrode, a positive electrode plate, a secondary battery, and an electric apparatus.

### BACKGROUND

The description herein merely provides background information related to this application and does not necessarily constitute the prior art.

With the gradual promotion of secondary battery technologies such as lithium-ion batteries in fields such as consumer electronics, electric vehicles, and energy storage power stations, the requirements for energy density of secondary batteries have become increasingly high. The composite current collector formed by introducing a polymer-based support layer on the basis of a metal current collector has a lighter density under the same thickness, and has special advantages in terms of safety and costs. However, the composite current collector has relatively poor processability, seriously affecting further promotion and application of the composite current collector.

Therefore, it is necessary to further develop new products of composite current collectors.

### SUMMARY

In view of the foregoing problems, this application provides a composite current collector for positive electrode, a positive electrode plate, a secondary battery, and an electric apparatus. The composite current collector for positive electrode is suitable for positive electrodes and can have significantly improved processability while maintaining good energy density.

According to a first aspect, this application provides a composite current collector for positive electrode including a support layer and a conductive layer disposed on at least one side of the support layer, the support layer being an organic support layer.

The support layer has a thickness denoted as d1, a tensile strength at break denoted as T1, a yield strength denoted as Q1, and an elastic modulus denoted as G1.

The conductive layer has a total thickness denoted as d2, a tensile strength at break denoted as T2, and an elastic modulus denoted as G2.

The composite current collector for positive electrode satisfies the following condition: $(d1 \times T1 - (d2 \times T2) \times (1 - \alpha) - d1 \times Q1 \times \alpha)$ >_ 800 Pa·m, where $\alpha = G1/(G1 + G2)$.

For the composite current collector for positive electrode including an organic support layer and a conductive layer, the thickness d1, tensile strength at break T1, yield strength Q1, and elastic modulus G1 of the support layer and the thickness d2, tensile strength at break T2, and elastic modulus G2 of the conductive layer are appropriately matched, and a distribution coefficient $\alpha = G1/(G1 + G2)$ is used to finely adjust the distribution of the elastic modulus between the support layer and the conductive layer, so that $(d1 \times T1 - (d2 \times T2) \times (1 - \alpha) - d1 \times Q1 \times \alpha)$ can be defined as a ductility coefficient of the composite current collector for positive electrode. The ductility coefficient can represent a residual force that can be withstood per unit width of the support layer when the composite current collector for positive electrode under stress enters a yield deformation stage after an elastic deformation. The "residual force" can roughly correspond to a residual force by deducting a force that the composite current collector for positive electrode at elastic limit can withstand from a force that the composite current collector for positive electrode at break can withstand. Based on the stress-strain relationship, a larger residual force indicates a larger elongation of the composite current collector for positive electrode during later plastic deformation. When the ductility coefficient of the composite current collector for positive electrode is greater than or equal to 800, the composite current collector for positive electrode has a higher elongation at break and better mass production processability. This is conducive to reducing the fracture of composite current collectors for positive electrode and improving the processing yield during the processing of electrode plates, and an increase in local interface side reactions caused by wrinkling of the electrode plate during charging and discharging can also be reduced or avoided, thereby improving the cycling performance of the battery. This is also conducive to mitigating the cracking problem at the cell level that may be caused by a gradual increase in the swelling force of the electrode plate in the later cell cycling stage, which is conducive to improving the cycling performance, safety, and reliability of the cell.

In some embodiments, the thickness d1 of the support layer is 4-15 μm;

optionally, the thickness d1 of the support layer is 4-12 μm; and
further optionally, the thickness d1 of the support layer is 4-6 μm.

A thicker composite current collector for positive electrode gives a lower cell energy density, whereas a too-thin composite current collector for positive electrode can withstand a relatively low force and has a low elongation, which is not beneficial to its processability. Adjusting the thickness of the support layer can indirectly adjust the thickness of the composite current collector for positive electrode, so that the composite current collector for positive electrode can have better energy density and superior processability.

In some embodiments, the tensile strength at break T1 of the support layer is greater than or equal to 200 MPa; and

optionally, the tensile strength at break T1 of the support layer is greater than or equal to 300 MPa.

The support layer with a higher tensile strength at break can withstand a greater force, which is more conducive for the composite current collector for positive electrode to achieve better mechanical strength, and more beneficial to the processability of the composite current collector for positive electrode.

In some embodiments, the yield strength Q1 of the support layer is greater than or equal to 90 MPa; and optionally, the yield strength Q1 of the support layer is greater than or equal to 150 MPa.

The support layer with a higher yield strength has better capability to resist micro-plastic deformation and is more beneficial to processing of the composite current collector for positive electrode.

In some embodiments, the composite current collector for positive electrode satisfies any one or any plurality of the following features:

the total thickness d2 of the conductive layer is 0.6-3 μm; optionally, the total thickness d2 of the conductive layer is 1-3 μm; and further optionally, the total thickness d2 of the conductive layer is 1.4-2.4 μm;

a unilateral thickness $d2_s$ of the conductive layer is 0.3-1.5 μm; optionally, the unilateral thickness $d2_s$ of the conductive layer is 0.5-1.5 μm; and further optionally, the unilateral thickness $d2_s$ of the conductive layer is 0.7-1.2 μm; and

a thickness $D_a$ of the composite current collector for positive electrode is 3-17 μm; optionally, the thickness $D_a$ of the composite current collector for positive electrode is 3-14 μm; and further optionally, the thickness $D_a$ of the composite current collector for positive electrode is 3.4-8.4 μm.

Adjusting the thickness of the conductive layer or directly controlling the thickness of the composite current collector for positive electrode within a specified range can make the composite current collector for positive electrode have better energy density and superior processability.

In some embodiments, the tensile strength at break T2 of the conductive layer is greater than or equal to 150 MPa; and

optionally, the tensile strength at break T2 of the conductive layer is greater than or equal to 200 MPa.

A higher tensile strength at break of the conductive layer is more beneficial to the processability of the composite current collector for positive electrode.

In some embodiments, the composite current collector for positive electrode satisfies any one or any plurality of the following features:

the elastic modulus G1 of the support layer is greater than or equal to 3 GPa; and optionally, the elastic modulus G1 of the support layer is greater than or equal to 4 GPa;

the elastic modulus G2 of the conductive layer is 25-40 GPa; and optionally, the elastic modulus G2 of the conductive layer is 25-35 GPa; and

$\alpha$ is 0.024-0.43; optionally, $\alpha$ is 0.095-0.300; and further optionally, $\alpha$ is 0.105-0.250.

By regulating the distribution of the elastic modulus between the support layer and the conductive layer, for example, by adjusting the value of $\alpha = G1/(G1 + G2)$, it is possible to reasonably adjust the magnitude of the respective forces experienced by the support layer and the conductive layer in the composite current collector for positive electrode under stress, so as to further increase the force that the composite current collector for positive electrode as a whole can withstand and thereby to better improve the processability of the composite current collector for positive electrode. When the current collector material composed of the support layer and the conductive layer is subjected to a force, during the elastic deformation stage, the actual forces applied to the support layer and the conductive layer are not the same due to the different elastic moduli (stiffness) of the two material layers, and a material with a larger elastic modulus tends to be subjected to a larger force. Therefore, it is possible to regulate the respective stress proportions of the support layer and conductive layer in the composite current collector for positive electrode by adjusting the distribution coefficient.

In some embodiments, $(d1 \times T1 - (d2 \times T2) \times (1 - \alpha) - d1 \times Q1 \times \alpha)$ >_ 1000 Pa·m; and optionally,

$$(d1 \times T1 - (d2 \times T2) \times (1 - \alpha) - d1 \times Q1 \times \alpha) \geq 1650\ Pa \cdot m.$$

A larger ductility coefficient of the composite current collector for positive electrode indicates that the composite current collector for positive electrode has a higher elongation at break and better mass production processability. This is more conducive to reducing the fracture of composite current collectors for positive electrode and improving the processing yield during the processing of electrode plates. This is also conducive to mitigating the cracking problem at the cell level that may be caused by a gradual increase in the swelling force of the electrode plate in the later cell cycling stage, which is more conducive to improving the cycling performance, safety, and reliability of the cell.

In some embodiments, the support layer is made of a polymer-based material or a polymer-based composite material.

Optionally, the polymer component in the support layer includes one or more of polyimide, polyamide, polyethylene terephthalate, polybutylene terephthalate, polyethylene naphthalate, polycarbonate, polyethylene, polypropylene, polypropylene ethylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfur nitride polymer materials, polyphenyl, polypyrrole, polyaniline, polythiophene, polypyridine, cellulose, starch, protein, epoxy resins, phenolic resins, derivatives of the foregoing materials, cross-linked products of the foregoing materials, and copolymers of the foregoing materials.

When a polymer material is selected as the main material of the support layer, the polymer has a lighter density and better ductility than the conductive metal, thereby reducing the surface density of the composite current collector for positive electrode so as to favorably increase the energy density of the cell and enhancing the overall ductility of the composite current collector for positive electrode so as to favorably improve the processing yield during the processing of electrode plates.

The main material of the support layer may or may not include materials other than polymers, or may form a composite material with other types of materials. As a polymer-based composite material, the main material can be suitably selected based on performance needs and in accordance with the processing requirements for the purpose of improving the processability of the composite current collector for positive electrode, cell performance, or a combination thereof. For example, the main material can improve one or more of the volume resistivity, elongation at break, Young's modulus, and other properties of the composite current collector for positive electrode.

In some embodiments, the polymer component in the support layer includes a polyimide, the polyimide including either or both of a homobenzene polyimide and a biphenyl polyimide.

Optionally, the polymer component in the support layer includes a biphenyl polyimide.

Further optionally, the support layer includes a biphenyl polyimide with a mass proportion greater than or equal to 50%.

Furthermore optionally, the support layer includes a biphenyl polyimide with a mass proportion greater than or equal to 80%.

Optionally, the support layer is made of biphenyl polyimide.

Polyimide is an organic carbonyl polymer containing an imide ring in the main chain and has good mechanical properties and heat resistance, high mechanical strength, and good high-temperature resistance. The use of polyimide in the support layer can take advantage of its tensile strength at break, yield strength, and elastic modulus properties to better coordinate with the tensile strength at break and elastic modulus of the conductive layer, thereby better adjusting the ductility coefficient of the composite current collector for positive electrode, which is more advantageous for realizing the dual requirements of good energy density and superior processability of the composite current collector for positive electrode.

Both homobenzene polyimide and biphenyl polyimide have the foregoing common advantages of polyimide. In addition, compared with that prepared using a homobenzene polyimide as the main material of the support layer, the composite current collector for positive electrode prepared using a biphenyl polyimide as the main material of the support layer has significantly improved performance in one or more of the mechanical properties (for example, tensile strength, elastic modulus, and elongation at break), use properties (for example, coating yield, ductility in cold pressing, and fracture frequency in cold pressing), and cell performance (for example, cycling capacity retention rate).

In some embodiments, the conductive layer includes a metal material, and optionally, the metal material includes one or more of aluminum and an aluminum alloy.

It is advantageous to provide better electrical conductivity when the conductive layer includes a metal material. Further, when the metal material includes one or more of aluminum and an aluminum alloy, it is easier to control the ductility coefficient of the composite current collector for positive electrode in a suitable range. Further, it is also easier to control the parameters such as the tensile strength at break and elastic modulus of the conductive layer in a more suitable range, so as to better take into account the cell energy density and the processability of the composite current collector for positive

electrode.

According to a second aspect, this application provides a positive electrode plate including the composite current collector for positive electrode according to the first aspect of this application.

According to a third aspect, this application provides a secondary battery including at least one of the composite current collector for positive electrode according to the first aspect of this application and the positive electrode plate according to the second aspect of this application.

The positive electrode plate including the composite current collector for positive electrode according to the first aspect of this application can have both good energy density and high mechanical strength, and may reduce or avoid an increase in local interface side reactions caused by wrinkling of the electrode plate during charging and discharging, thereby improving the cycling performance of the battery. Further, for the secondary battery including the foregoing composite current collector for positive electrode or the foregoing positive electrode plate, this is conducive to mitigating the cracking problem that may be caused by a gradual increase in the swelling force of the electrode plate in the later cell cycling stage and improving the cycling performance, safety, and reliability of the cell.

According to a fourth aspect, this application provides an electric apparatus including at least one of the composite current collector for positive electrode according to the first aspect of this application, the positive electrode plate according to the second aspect of this application, and the secondary battery according to the third aspect of this application.

According to a fifth aspect, this application provides a preparation method of the composite current collector for positive electrode according to the first aspect of this application, including the following step: forming the conductive layer on at least one side of the support layer so as to produce the composite current collector for positive electrode.

The composite current collector for positive electrode prepared by using the support layer with a specific thickness d1, a specific tensile strength at break T1, a specific yield strength Q1, and a specific elastic modulus G1 and the conductive layer further formed with a specific thickness d2, a specific tensile strength at break T2, and a specific elastic modulus G2 has a higher ductility coefficient, a higher elongation at break, and better mass production processability. This is conducive to reducing the fracture of current collectors for positive electrode and improving the processing yield during the processing of electrode plates, and an increase in local interface side reactions caused by wrinkling of the electrode plate during charging and discharging can also be reduced or avoided, thereby improving the cycling performance of the battery. This is also conducive to mitigating the cracking problem at the cell level that may be caused by a gradual increase in the swelling force of the electrode plate in the later cell cycling stage, which is conducive to improving the cycling performance, safety, and reliability of the cell.

According to a sixth aspect, this application provides a preparation method of positive electrode plate, including the following steps: applying a positive electrode slurry on at least one side surface of the composite current collector for positive electrode according to the first aspect of this application, followed by drying and cold pressing, to produce the positive electrode plate.

When the positive electrode plate is prepared using the composite current collector for positive electrode according to the first aspect of this application, the positive electrode plate prepared can have both good energy density and high mechanical strength, and may reduce or avoid an increase in local interface side reactions caused by wrinkling of the electrode plate during charging and discharging, thereby improving the cycling performance of the battery. For the secondary battery further prepared and including the foregoing composite current collector for positive electrode or the foregoing positive electrode plate, this is also conducive to mitigating the cracking problem that may be caused by a gradual increase in the swelling force of the electrode plate in the later cell cycling stage and improving the cycling performance, safety, and reliability of the cell.

Details of one or more embodiments of this application are set forth in the following accompanying drawings and description. Other features, objectives, and advantages of this application will become apparent from the specification, the accompanying drawings, and the claims.

## BRIEF DESCRIPTION OF DRAWINGS

Reference may be made to one or more of the accompanying drawings for the purpose of better describing and illustrating those embodiments or examples of the application disclosed herein. The additional details or examples used to describe the accompanying drawings should not be considered limitations on the scope of any one of the disclosed application, the currently described embodiments or examples, and the best mode of this application as currently understood. Moreover, throughout the accompanying drawings, the same reference signs represent the same components. In the accompanying drawings:

FIG. 1 is a schematic diagram of a structure of a composite current collector for positive electrode according to an embodiment of this application, with a conductive layer disposed on two sides of a support layer;
FIG. 2 is a schematic diagram of a structure of a composite current collector for positive electrode according to an

embodiment of this application, with a conductive layer disposed on one side of a support layer;
FIG. 3 is a schematic diagram of a secondary battery according to an embodiment of this application;
FIG. 4 is an exploded view of the secondary battery according to the embodiment of this application in FIG. 3; and
FIG. 5 is a schematic diagram of an electric apparatus using a secondary battery as a power source according to an embodiment of this application.

Description of reference signs:

5. secondary battery; 51. housing; 52. electrode assembly; 53. cover plate; 6. electric apparatus; 100. composite current collector for positive electrode; 110. support layer; and 120. conductive layer.

## DESCRIPTION OF EMBODIMENTS

The following discloses some embodiments of a composite current collector for positive electrode, a positive electrode plate, a secondary battery, and an electric apparatus of this application with appropriate reference to detailed descriptions of the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

Value "ranges" disclosed in this application are defined in the form of lower and upper limits. A given range is defined by one lower limit and one upper limit selected, where the selected lower and upper limits define boundaries of that particular range. Ranges defined in this method may or may not include end values, any of the end values may be independently included or excluded, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to listing that the parameter is, for example, an integer among 2, 3, 4, 5, 6, 7, 8, 9, 10, 11, 12, and so on. For example, a parameter expressed as an integer selected from "2-10" is equivalent to listing integers of 2, 3, 4, 5, 6, 7, 8, 9, and 10.

Unless otherwise specified, all the embodiments and optional embodiments of this application can be combined with each other to form new technical solutions.

Unless otherwise specified, all the steps in this application can be performed in the order described or in random order, and preferably, may be performed in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "have", "include", "contain", and "comprise" mentioned in this application are inclusive or may be exclusive. For example, terms "include" and "comprise" can mean that other unlisted members or timing features may also be included or contained, or only listed members or timing features are included or contained. The member is a material, a component, a structure, an element, and an instrument, for example; and a non-limiting example of the timing feature is an action, a condition under which actions occur, timing, a state, and a step, for example.

Unless otherwise specified, in this application, the term "or" is inclusive. For example, the phrase "A or B" means "A, B, or both A and B". Further, any one of the following conditions satisfies the condition "A or B": A is true (or present) and B is false (or not present); A is false (or not present) and B is true (or present); or both A and B are true (or present).

In this application, unless otherwise specified, A (for example, B) indicates that B is a non-limiting example of A, and it can be understood that A is not limited to B.

In this application, unless otherwise specified, the feature or scheme corresponding to "and/or" includes any one item from the two or more relevant listed items, as well as any and all combinations of the relevant listed items, the any and all combinations including any two of the relevant listed items, any more of the relevant listed items, or a combination of all relevant listed items. For example, "A and/or B" represents a group consisting of A, B, and a "combination of A and B". "Including A and/or B" can mean "including A, including B, and including A and B", or "including A, including B, or including A and B", which can be understood appropriately according to the sentence in question.

In this application, the terms such as "a plurality of" and "multiple," unless specifically specified, refer to a quantity greater than or equal to 2. For example, "one or more" means one or more than or equal to two. It can be understood that "any plurality" of items refers to any suitable combination of a plurality of items, that is, a combination of "any plurality" of items in a manner that does not conflict and enables implementation of this application.

As used in this application, terms such as "a combination thereof", "any combination thereof", and "any combination manner thereof" include all suitable combinations of any two or more of the listed items.

In this application, the meaning of "suitable" in expressions such as "suitable combination manner", "suitable manner", and "any suitable manner" should be determined based on the ability to implement the technical solution in this application.

Herein, it should be understood that "preferred" and "better" are only used to describe a better implementation or embodiment, and are not intended to limit the protection scope of this application. If multiple instances of "preferred" appear in a single technical solution, unless otherwise specified, and there are no conflicts or mutually restrictive relationships, each instance of "preferred" is independent of the other.

In this application, "optionally" and "optional" means that something may be not essential, that is, any one of two concurrent schemes of "with" and "without". If multiple instances of "optional" appear in a single technical solution, unless otherwise specified, and there are no conflicts or mutually restrictive relationships, each instance of "optional" is independent of the other.

In this application, terms such as "further", "furthermore", and "particularly" are used for descriptive purposes to indicate differences in content, but should not be construed as a limitation of the protection scope of this application.

In this application, the terms such as "first", "second", "third", and "fourth" in "first aspect", "second aspect", "third aspect", "fourth aspect", and the like are used for descriptive purpose and should not be construed as indicating or implying relative importance or quantity, or as implicitly specifying the importance or quantity of the technical features indicated. Moreover, it should be understood that "first", "second", "third", "fourth" and the like only serve the purpose of non-exhaustive enumeration and description and do not constitute a closed limitation of quantity.

In this application, when it comes to a unit related to a data range, if the unit is only provided after the right endpoint, it indicates that the units for both the left and right endpoints are the same. For example, 3-5 h or 3-5 h both indicates that the unit for the left endpoint "3" and the right endpoint "5" are both h (hours).

The weights of the relevant components mentioned in the specification of the embodiments of this application can not only refer to the content of each component, but also indicate the proportional relation between the weights of the components. Therefore, any content of the relevant components scaled up or down in accordance with the specification of the embodiments of this application falls within the scope of this application. Further, the weight described in the specification of the embodiments of this application may be in μg, mg, g, kg, and other units of mass known in the chemical field.

With the gradual promotion of secondary battery technologies such as lithium-ion batteries in fields such as consumer electronics, electric vehicles, and energy storage power stations, the requirements for energy density of secondary batteries have become increasingly high. In terms of the current collector, the thickness of traditional aluminum foil positive electrode current collectors can be reduced to be relatively thin (for example, 10 μm). However, in the cell preparation process, common issues such as wrinkling during winding and unwinding, cracking in cold pressing, and breaking exist, and the improvement of processability has basically reached its limit. To further increase the energy density, the composite current collector with "metal-polymer-metal" sandwich structure has a lighter density under the same thickness, and has special advantages in safety and cost, thereby becoming a research hotspot in current industry. However, the composite current collector has relatively poor processability, seriously affecting further promotion and application of the composite current collector: in the production and processing process, due to the lower stiffness and temperature resistance of the polymer layer compared to the metal, the composite current collector may also have the problem of poor processability caused by tab warping during the coating and drying process, excessive ductility in cold pressing, and the like. In addition, based on the current composite current collector manufacturing process, the composite current collector surface is prone to defects such as pinholes, which can easily lead to problems in the use process, such as broke application of slurry due to slurry missing in coating and cracking of electrode plate in cold pressing, and the problems are prone to further aggravation when the thickness of the current collector is further reduced.

According to a first aspect, this application provides a composite current collector for positive electrode including a support layer and a conductive layer disposed on at least one side of the support layer, the support layer being an organic support layer.

The support layer has a thickness denoted as d1, a tensile strength at break denoted as T1, a yield strength denoted as Q1, and an elastic modulus denoted as G1.

The conductive layer has a total thickness denoted as d2, a tensile strength at break denoted as T2, and an elastic modulus denoted as G2.

The composite current collector for positive electrode satisfies the following condition: $(d1 \times T1 - (d2 \times T2) \times (1 - \alpha) - d1 \times Q1 \times \alpha)$ >_ 800 Pa·m, where $\alpha = G1/(G1 + G2)$.

In this application, the "composite current collector for positive electrode" provided in the first aspect is a composite current collector suitable for the positive electrode and can be used directly as a positive electrode current collector or for preparing a positive electrode current collector. For example, on the premise of satisfying the characteristics of the composite current collector for positive electrode of this application, it is possible to further laminate other functional structural layers so as to produce a positive electrode current collector that also has more functions.

In this application, unless otherwise specified, the "support layer" refers to a structural layer in the composite current collector for positive electrode, which serves to support the conductive layer. Unless otherwise specified, the main material of the support layer is an organic material, which can provide a lighter density than a conductive metal to meet the cell energy density requirements.

Unless otherwise specified, the main material of the "organic support layer" used in this application is an organic material and further mainly includes a polymer material. The polymer can provide a certain mechanical strength. A functional additive suitable for the composite current collector for positive electrode may be added to the organic support layer as needed.

Unless otherwise specified, the meaning of "main material" and "mainly include" as used in this application means that a weight proportion of the listed material is at least greater than or equal to 50%, further may be greater than or equal to 60%, furthermore may be greater than or equal to 70%, furthermore may be greater than or equal to 80%, and furthermore may be greater than or equal to 90%, or may be any one of the following weight percentages, be greater than or equal to any one of the following weight percentages, or selected from a range defined by any two of the following weight percentages: 50%, 60%, 70%, 80%, 90%, 95%, 96%, 97%, 98%, 99%, 100%, and the like. Non-limiting examples of the range defined by any two of the foregoing weight percentages are 50-100%, 60-100%, 70-100%, 80-100%, 90-100%, and the like. For example, "the main material of A is B" and "A mainly includes B" mean that the weight percentage of B in A can satisfy any one of the foregoing suitable conditions, and it is preferable to obtain a superior ductility coefficient.

In this application, $(d1 \times T1 - (d2 \times T2) \times (1 - \alpha) - d1 \times Q1 \times \alpha)$ is defined as a ductility coefficient of the composite current collector for positive electrode. The ductility coefficient can represent a residual force that can be withstood per unit width of the support layer when the composite current collector for positive electrode under stress enters a yield deformation stage after an elastic deformation. The "residual force" can roughly correspond to a residual force by deducting a force that the composite current collector for positive electrode at elastic limit can withstand from a force that the composite current collector for positive electrode at break can withstand. Based on the stress-strain relationship, a larger residual force indicates a larger elongation of the composite current collector for positive electrode during later plastic deformation. This ductility coefficient is expressed in MPa·μm or Pa·m, or may be converted to N/m, and can be considered as a force per unit width in physics. The value of the ductility coefficient can be calculated by using micrometers (μm) as the unit of thickness and MPa as the unit of the tensile strengths at break T1, T2, and the yield strength Q1.

In this application, the $G1/(G1 + G2)$ is defined as a distribution coefficient $\alpha$ of the composite current collector for positive electrode and is equal to a ratio of the elastic modulus of the support layer to a sum of the elastic modulus of the support layer and the elastic modulus of the conductive layer, which can reflect percentages of the distribution of the elastic modulus of the composite current collector for positive electrode between the support layer and the conductive layer, and indicate a proportion of the elastic modulus of the support layer in the elastic modulus of a composite system formed by the support layer and the conductive layer. The distribution coefficient $\alpha$ is a dimensionless value. When the composite current collector material composed of the support layer and the conductive layer is subjected to a force, during the elastic deformation stage, the actual forces applied to the support layer and the conductive layer are not the same due to the different elastic moduli (stiffness) of the two material layers, and a material with a larger elastic modulus tends to be subjected to a larger force. Therefore, it is possible to regulate the respective stress proportions of the support layer and conductive layer in the composite current collector for positive electrode by adjusting the distribution coefficient.

For the composite current collector for positive electrode including an organic support layer and a conductive layer, the thickness d1, tensile strength at break T1, yield strength Q1, and elastic modulus G1 of the support layer and the thickness d2, tensile strength at break T2, and elastic modulus G2 of the conductive layer are appropriately matched, and a distribution coefficient $\alpha$ is used to finely adjust the distribution of the elastic modulus between the support layer and the conductive layer, so as to regulate the ductility coefficient $(d1 \times T1 - (d2 \times T2) \times (1 - \alpha) - d1 \times Q1 \times \alpha)$ of the composite current collector for positive electrode. When the ductility coefficient of the composite current collector for positive electrode is greater than or equal to 800, the composite current collector for positive electrode has a higher elongation at break and better mass production processability. This is conducive to reducing the fracture of composite current collectors for positive electrode and improving the processing yield during the processing of electrode plates, and an increase in local interface side reactions caused by wrinkling of the electrode plate during charging and discharging can also be reduced or avoided, thereby improving the cycling performance of the battery. This is also conducive to mitigating the cracking problem at the cell level that may be caused by a gradual increase in the swelling force of the electrode plate in the later cell cycling stage, which is conducive to improving the cycling performance, safety, and reliability of the cell.

If this ductility coefficient is less than 800 Pa·m, the elongation of the composite current collector for positive electrode is low, which is likely to lead to a low yield during the processing of the positive electrode plate and poor cell

cycling performance. The synergistic effect between the thickness d1, tensile strength at break T1, yield strength Q1, and elastic modulus G1 of the support layer and the total thickness d2, tensile strength at break T2, and elastic modulus G2 of the conductive layer jointly affects the ductility coefficient of the composite current collector for positive electrode. In some aspects of the synergistic effect, for example, a too-large thickness affects the energy density, and a too-thin thickness may not only lead to a low processing yield, but also tend to lead to poor electrode plate interface of the cell and large cycling swelling during cycling, thereby affecting the cycling performance; and in addition, the elastic modulus and the tensile strength at break also affect the cell cycling performance.

In this application, unless otherwise specified, the temperatures for testing the thickness d1, tensile strength at break T 1, yield strength Q1, and elastic modulus G1 of the support layer and the total thickness d2, tensile strength at break T2, and elastic modulus G2 of the conductive layer are all 15-35°C, for example, 20-30°C, and further at 25°C, for example.

In this application, unless otherwise specified, for the measurement of the tensile strengths at break T1 and T2, yield strength Q1, and elastic moduli G1 and G2, a sample with the following dimensions and made of the same material as that of the object under test (the conductive layer or the support layer of the composite current collector for positive electrode) is selected for the tensile test, and the sample has a width of 15 mm and a length of 150 mm. It can be understood that the tensile test applies a tensile force in the length direction of the sample, which corresponds to the length direction of a roll material of the current collector and can be denoted as MD direction. Unless otherwise specified, for the tensile strengths at break T1 and T2, the tensile tests were carried out using the following parameters: a tensile distance of 50 mm and a tensile speed of 50 mm/min. Unless otherwise specified, the elastic moduli G1 and G2 were obtained based on the analysis of the results of the tensile tests at the elongation of 1%: elastic modulus = tensile strength at elastic deformation stage/corresponding elongation = tensile strength at elastic deformation stage/1%; where the elongation is a percentage of an increased value ($\Delta L$) in length in the tensile direction of the sample under the action of the tensile force with respect to the initial length (L0) of the sample without stretching, numerically equal to $\Delta L/L0 \times 100\%$. It should be noted that in testing parameters such as tensile strength at break, yield strength, and elastic modulus, if the thickness of the conductive layer is thin (for example, less than or equal to 2 μm), difficult to directly perform the tensile test, or difficult to prepare and test a sample according to the same thickness, the composition of the conductive layer can be detected first, and then a sample of the same material with a measurable thickness (for example, 10-100 μm) can be prepared for the corresponding tensile test.

In this application, for a composite current collector sample taken from a secondary battery or from a positive electrode plate, in testing parameters such as tensile strength at break, yield strength, and elastic modulus, the support layer can be peeled off the sample of the composite current collector for positive electrode for the tensile testing; and for the conductive layer, the composition of the conductive layer can be detected first, and then a sample of the same material with a measurable thickness (for example, 10-100 μm) can be prepared for the corresponding tensile test.

The composite current collector for positive electrode provided in this application satisfies the following condition: $(d1 \times T1 - (d2 \times T2) \times (1 - \alpha) - d1 \times Q1 \times \alpha)$ >_ 800 Pa·m, where $\alpha = G1/(G1 + G2)$. Further, the samples for testing T1, Q1, G1, T2, and G2 all satisfy: a width of 15 mm and a length of 150 mm; and furthermore, the test parameters in the tensile mode include: a tensile distance of 50 mm and a tensile speed of 50 mm/min. Furthermore, the temperatures for testing d1, T1, Q1, G1, d2, T2, and G2 are all 15-35°C, for example 20-30°C, and further is 25°C, for example.

In some embodiments, at 15-35°C, the composite current collector for positive electrode satisfies the following condition: $(d1 \times T1 - (d2 \times T2) \times (1 - \alpha) - d1 \times Q1 \times \alpha) \geq 800$ Pa·m, where $\alpha = G1/(G1 + G2)$.

In this application, unless otherwise specified, the tensile strength at break T1, yield strength Q1, and elastic modulus G1 of the support layer and the tensile strength at break T2 and elastic modulus G2 of the conductive layer may be obtained using a tensile machine (as a non-limiting example, such as an INSTRON 3365 tensile machine) for testing and analysis.

In a non-limiting example, the width of the sample (which may be denoted as w0) is 15 mm, the length of the sample is 150 mm, the tensile distance (which may be denoted as s0) is 50 mm, and the tensile speed is 50 mm/min. The parameters can be calculated by the following equation:

$$\text{yield strength} = \text{tensile force at yield point/sample cross-sectional area}$$

; where sample cross-sectional area = w0 × sample thickness;

$$\text{tensile strength at break} = \text{tensile force at break point/sample cross-sectional area;}$$

where sample cross-sectional area = w0 × sample thickness;

$$\text{elastic modulus} = \text{tensile strength measured at ductility of } \delta/\delta;$$

where the ductility value δ is taken as 1%; and

$$\text{elongation at break} = (\text{length of sample when stretched to break} - s0)/s0 \times 100\%;$$

where elastic modulus = tensile strength at elastic deformation stage/corresponding elongation, and for convenience of calculation, the tensile strength measured at the ductility of 1% (elastic deformation stage)/1% is taken for calculation.

In addition, for a sample of the conductive layer with a thin thickness (for example, less than or equal to 2 μm), the composition of the conductive layer can be detected first, and then a sample of the same material with a measurable thickness (for example, 10-100 μm) can be prepared for the corresponding tensile test.

The conductive layer may be disposed on a single side of the support layer or on two sides of the support layer.

FIG. 1 is a schematic diagram of a structure of a composite current collector for positive electrode 100 according to an embodiment of this application, including a support layer 110 and a conductive layer 120 disposed on two sides of the support layer.

FIG. 2 is a schematic diagram of a structure of a composite current collector for positive electrode 100 according to an embodiment of this application, including a support layer 110 and a conductive layer 120 disposed on two sides of the support layer.

In some embodiments, the thickness d1 of the support layer is 4-15 μm; optionally, the thickness d1 of the support layer is 4-12 μm; and further optionally, the thickness d1 of the support layer is 4-6 μm. The thickness of the support layer may further be any one of the following thicknesses or selected from a ranged defined by any two of the following thicknesses: 4 μm, 5 μm, 6 μm, 7 μm, 8 μm, 9 μm, 10 μm, 11 μm, 12 μm, and the like.

A thicker composite current collector for positive electrode gives a lower cell energy density, whereas a too-thin composite current collector for positive electrode can withstand a relatively low force and has a low elongation, which is not beneficial to its processability. Adjusting the thickness of the support layer can indirectly adjust the thickness of the composite current collector for positive electrode, so that the composite current collector for positive electrode can have better energy density and superior processability. A too-thin support layer is likely to lead to increased processing difficulty of the composite current collector for positive electrode and lower production yield, which is disadvantageous for batch application; and a too-thick support layer is likely to lead to a decrease in the advantages in terms of energy density increase, improvement in cell production yield, and so on, and lead to higher costs and lower cost-effectiveness.

In some embodiments, the tensile strength at break T1 of the support layer is greater than or equal to 200 MPa; and further, the tensile strength at break T1 of the support layer may be greater than or equal to 300 MPa. The tensile strength at break T1 of the support layer may further be any one of the following strengths, or may be greater than or equal to any one of the following strengths, or may be selected from a range defined by any two of the following strengths: 200 MPa, 250 MPa, 300 MPa, 350 MPa, 400 MPa, 450 MPa, 500 MPa, 540 MPa, 550 MPa, 600 MPa, and the like. The tensile strength at break T1 of the support layer may be selected from any one of the following ranges: 200-600 MPa, 240-600 MPa, 250-600 MPa, 300-600 MPa, 200-550 MPa, 240-550 MPa, 250-550 MPa, 300-550 MPa, and the like.

The support layer with a higher tensile strength at break can withstand a greater force, which is more conducive for the composite current collector for positive electrode to achieve better mechanical strength, and more beneficial to the processability of the composite current collector for positive electrode.

In some embodiments, the yield strength Q1 of the support layer is greater than or equal to 90 MPa; and optionally, the yield strength Q1 of the support layer is greater than or equal to 150 MPa. The yield strength Q1 of the support layer may further be any one of the following strengths, or may be greater than or equal to any one of the following strengths, or may be selected from a range defined by any two of the following strengths: 90 MPa, 100 MPa, 120 MPa, 150 MPa, 160 MPa, 180 MPa, 200 MPa, 210 MPa, 220 MPa, 240 MPa, 250 MPa, and the like. The yield strength Q1 of the support layer may be selected from any one of the following ranges: 90-250 MPa, 100-250 MPa, 150-250 MPa, 90-220 MPa, 100-220 MPa, 150-220 MPa, and the like.

The support layer with a higher yield strength has better capability to resist micro-plastic deformation and is more beneficial to processing of the composite current collector for positive electrode.

In some embodiments, the total thickness d2 of the conductive layer is 0.6-3 μm; optionally, the total thickness d2 of the conductive layer is 1-3 μm; and further optionally, the total thickness d2 of the conductive layer is 1.4-2.4 μm. The total thickness d2 of the conductive layer may further be any one of the following thicknesses or selected from a range defined by any two of the following thicknesses: 1 μm, 1.2 μm, 1.4 μm, 1.5 μm, 1.6 μm, 1.8 μm, 2 μm, 2.2 μm, 2.4 μm, 2.5 μm, 2.6 μm, 2.8 μm, 3 μm, and the like. The total thickness d2 of the conductive layer may further be selected from any one of the following ranges: 1.5-2 μm, 1.6-2 μm, and the like.

In this application, when the conductive layer is disposed on a single side of the support layer, the total thickness d2 of the conductive layer is numerically equal to the thickness of that single side; and when the conductive layer is

disposed on two sides of the support layer, the total thickness d2 of the conductive layer is numerically equal to the sum of the thicknesses of the two sides. When the conductive layer is disposed on the two sides of the support layer, the thicknesses of the two sides may be the same or different. When the conductive layer on the two sides is made of different materials, the ductility coefficient of the composite current collector for positive electrode can be calculated based on the total thickness of the conductive layer obtained from testing and analysis of the two sides, an average value of the tensile strength at break, and an average value of the elastic modulus, denoted as d2, T2, and G2, respectively.

In some embodiments, a unilateral thickness $d2_s$ of the conductive layer is 0.3-1.5 μm; optionally, the unilateral thickness $d2_s$ of the conductive layer is 0.5-1.5 μm; and further optionally, unilateral thickness $d2_s$ of the conductive layer is 0.7-1.2 μm. The unilateral thickness $d2_s$ of the conductive layer may further be any one of the following thicknesses or selected from a range defined by any two of the following thicknesses: 0.5 μm, 0.6 μm, 0.7 μm, 0.8 μm, 0.9 μm, 1 μm, 1.1 μm, 1.2 μm, 1.3 μm, 1.4 μm, 1.5 μm, and the like. The unilateral thickness $d2_s$ of the conductive layer may further be selected from any one of the following ranges: 0.5-1 μm, 0.8-1.5 μm, 0.8-1.2 μm, 0.5-1.2 μm, and the like.

In some embodiments, a thickness $D_a$ of the composite current collector for positive electrode is 3-17 μm; optionally, the thickness $D_a$ of the composite current collector for positive electrode is 3-14 μm; and further optionally, the thickness $D_a$ of the composite current collector for positive electrode is 3.4-8.4 μm. The thickness $D_a$ of the composite current collector for positive electrode may further be any one of the following thicknesses, or selected from a range defined by any two of the following thicknesses: 3 μm, 3.4 μm, 3.5 μm, 4 μm, 4.5 μm, 5 μm, 5.5 μm, 6 μm, 6.5 μm, 7 μm, 7.5 μm, 8 μm, 8.4 μm, 8.5 μm, 9 μm, 9.5 μm, 10 μm, 10.5 μm, 11 μm, 11.5 μm, 12 μm, 12.5 μm, 13 μm, 13.5 μm, 14 μm, and the like. The thickness $D_a$ of the composite current collector for positive electrode may further be selected from any one of the following ranges: 4-17 μm, 4-14 μm, 4-10 μm, 5-17 μm, 5-14 μm, 5-10 μm, 6-17 μm, 6-14 μm, 6-10 μm, 6-8 μm, and the like.

In some embodiments, the composite current collector for positive electrode satisfies any one or any plurality of the following features:

the total thickness d2 of the conductive layer is 0.6-3 μm; optionally, the total thickness d2 of the conductive layer is 1-3 μm; and further optionally, the total thickness d2 of the conductive layer is 1.4-2.4 μm;
the unilateral thickness $d2_s$ of the conductive layer is 0.3-1.5 μm; optionally, the unilateral thickness $d2_s$ of the conductive layer is 0.5-1.5 μm; and further optionally, the unilateral thickness $d2_s$ of the conductive layer is 0.7-1.2 μm; and
the thickness $D_a$ of the composite current collector for positive electrode is 3-17 μm; optionally, the thickness $D_a$ of the composite current collector for positive electrode is 3-14 μm; and further optionally, the thickness $D_a$ of the composite current collector for positive electrode is 3.4-8.4 μm;
where any one of the parameters of the total thickness d2 of the conductive layer, the unilateral thickness $d2_s$ of the conductive layer, and the thickness $D_a$ of the composite current collector for positive electrode may further have suitable features in any of the foregoing embodiments, and the three parameters may be selected in a suitable manner from suitable combinations of the foregoing features.

Adjusting the thickness of the conductive layer or directly controlling the thickness of the composite current collector for positive electrode within a specified range can make the composite current collector for positive electrode have better energy density and superior processability.

A too-thick composite current collector for positive electrode may lead to a lower degree of improvement in the cell gravimetric energy density and volumetric energy density, and a too-thin composite current collector for positive electrode may lead to compatibility issues with current cell preparation processes, potentially causing a decrease in yield and being not conducive to industrial application.

A too-thin conductive layer may lead to a weakening of the conductivity of the composite current collector for positive electrode, which is not conducive to the rate performance of the cell; and a too-thick conductive layer may increase the amount per unit area of the composite current collector for positive electrode, thereby reducing the advantage of the composite current collector for positive electrode in improving the cell energy density.

In some embodiments, the tensile strength at break T2 of the conductive layer is greater than or equal to 150 MPa; and optionally, the tensile strength at break T2 of the conductive layer is greater than or equal to 200 MPa. The tensile strength at break T2 of the conductive layer may further be any one of the following strengths, or may be greater than or equal to any one of the following strengths, or may be selected from a range defined by any two of the following strengths: 150 MPa, 160 MPa, 170 MPa, 180 MPa, 200 MPa, 210 MPa, 220 MPa, 240 MPa, 250 MPa, 260 MPa, 270 MPa, 280 MPa, 300 MPa, and the like. The tensile strength at break T2 of the conductive layer may be selected from any one of the following ranges: 180-300 MPa, 200-300 MPa, 180-250 MPa, 200-250 MPa, and the like.

A higher tensile strength at break of the conductive layer is more beneficial to the processability of the composite current collector for positive electrode.

In some embodiments, the elastic modulus G1 of the support layer is greater than or equal to 3 GPa; and

optionally, the elastic modulus G1 of the support layer is greater than or equal to 4 GPa. The elastic modulus G1 of the support layer may further be any one of the following moduli, or may be greater than or equal to any one of the following moduli, or may be selected from a range defined by any two of the following moduli: 3 GPa, 3.5 GPa, 4 GPa, 4.2 GPa, 4.5 GPa, 4.6 GPa, 4.8 GPa, 5 GPa, 5.5 GPa, 6 GPa, 6.5 GPa, 7 GPa, 7.5 GPa, 8 GPa, 10 GPa, and the like. The elastic modulus G1 of the support layer may further be selected from any one of the following ranges: 3-10 GPa, 4-10 GPa, 3-8 GPa, 4-8 GPa, and the like.

In some embodiments, the elastic modulus G2 of the conductive layer is 25-40 GPa; and optionally, the elastic modulus G2 of the conductive layer is 25-35 GPa. The elastic modulus G2 of the conductive layer may further be any one of the following moduli or selected from a range defined by any two of the following moduli: 30 GPa, 30.5 GPa, 31 GPa, 31.5 GPa, 32 GPa, 32.5 GPa, 33 GPa, 33.5 GPa, 34 GPa, 34.5 GPa, 35 GPa, 35.5 GPa, 36 GPa, 36.5 GPa, 37 GPa, 38 GPa, 39 GPa, 40 GPa, and the like. The elastic modulus G2 of the conductive layer may further be selected from any one of the following ranges: 30-37 GPa, 30-35 GPa, and the like.

In some embodiments, the distribution coefficient $\alpha$ is 0.024-0.43; optionally, the distribution coefficient $\alpha$ is 0.095-0.300; and further optionally, the distribution coefficient $\alpha$ is 0.105-0.250. The distribution coefficient $\alpha$ may further be any one of the following values or selected from a range defined by any two of the following values: 0.024, 0.025, 0.030, 0.040, 0.050, 0.060, 0.080, 0.090, 0.095, 0.098, 0.100, 0.103, 0.105, 0.106, 0.108, 0.110, 0.115, 0.116, 0.118, 0.120, 0.125, 0.130, 0.140, 0.145, 0.150, 0.155, 0.160, 0.165, 0.170, 0.180, 0.185, 0.190, 0.195, 0.200, 0.21, 0.22, 0.24, 0.25, 0.26, 0.28, 0.30, 0.32, 0.33, 0.34, 0.35, 0.36, 0.38, 0.40, 0.42, 0.43, and the like. The distribution coefficient $\alpha$ may further be selected from any one of the following ranges: 0.09-0.3, 0.09-0.25, 0.09-0.2, 0.095-0.25, 0.095-0.20, 0.103-0.195, 0.108-0.195, 0.1-0.2 (which may include 0.10-0.20), 0.10-0.25, and the like.

In some embodiments, the composite current collector for positive electrode satisfies any one or any plurality of the following features:

the elastic modulus G1 of the support layer is greater than or equal to 3 GPa; and optionally, the elastic modulus G1 of the support layer is greater than or equal to 4 GPa;
the elastic modulus G2 of the conductive layer is 25-40 GPa; and optionally, the elastic modulus G2 of the conductive layer is 25-35 GPa; and
the distribution coefficient $\alpha$ is 0.024-0.43; optionally, the distribution coefficient $\alpha$ is 0.095-0.300; and further optionally, the distribution coefficient $\alpha$ is 0.105-0.250.

By regulating the distribution of the elastic modulus between the support layer and the conductive layer, for example, by adjusting the value of $\alpha = G1/(G1 + G2)$, it is possible to reasonably adjust the magnitude of the respective forces experienced by the support layer and the conductive layer in the composite current collector for positive electrode under stress, so as to further increase the force that the composite current collector for positive electrode as a whole can withstand and thereby to better improve the processability of the composite current collector for positive electrode.

In some embodiments, the ductility coefficient $(d1 \times T1 - (d2 \times T2) \times (1 - \alpha) - d1 \times Q1 \times \alpha)$ is greater than or equal to 800 Pa·m; optionally, the ductility coefficient $(d1 \times T1 - (d2 \times T2) \times (1 - \alpha) - d1 \times Q1 \times \alpha)$ is greater than or equal to 1000 Pa·m; and further optionally, the ductility coefficient $(d1 \times T1 - (d2 \times T2) \times (1 - \alpha) - d1 \times Q1 \times \alpha)$ is greater than or equal to 1650 Pa·m. The ductility coefficient may further be any one of the following values, or may be greater than or equal to any one of the following values, or may be selected from a range defined by any two of the following values: 800 Pa·m, 840 Pa·m, 850 Pa·m, 900 Pa·m, 1000 Pa·m, 1018 Pa·m, 1020 Pa·m, 1025 Pa·m, 1050 Pa·m, 1100 Pa·m, 1200 Pa·m, 1300 Pa·m, 1400 Pa·m, 1450 Pa·m, 1500 Pa·m, 1550 Pa·m, 1600 Pa·m, 1650 Pa·m, 1700 Pa·m, 1800 Pa·m, 2000 Pa·m, 2200 Pa·m, 2400 Pa·m, 2500 Pa·m, 2600 Pa·m, 2650 Pa·m, 2660 Pa·m, 2700 Pa·m, 2800 Pa·m, 3000 Pa·m, 3500 Pa·m, 4000 Pa·m, and the like. The ductility coefficient may further be selected from any one of the following ranges: 840-2660 Pa·m, 1018-2660 Pa·m, 800-3000 Pa·m, 1000-3000 Pa·m, 800-2800 Pa·m, 1000-2800 Pa·m, and the like.

A larger ductility coefficient of the composite current collector for positive electrode indicates that the composite current collector for positive electrode has a higher elongation at break and better mass production processability. This is more conducive to reducing the fracture of composite current collectors for positive electrode and improving the processing yield during the processing of electrode plates. This is also conducive to mitigating the cracking problem at the cell level that may be caused by a gradual increase in the swelling force of the electrode plate in the later cell cycling stage, which is more conducive to improving the cycling performance, safety, and reliability of the cell.

In this application, the "processing yield" of the current collector refers to a ratio of the number of qualified electrode plates produced for current collectors in the cell preparation process to the quantity of current collectors input for production, or it may refer to a ratio of the length of qualified electrode plates produced for current collectors in the cell preparation process to the total length of the output of the current collector, and it may further refer to a coating yield in the processes of cell production. In addition, parameters such as the crack frequency in cold pressing can also reflect the processing yield. A higher processing yield indicates better processability of the current collector.

In this application, the current collector includes a positive electrode current collector and a negative electrode

current collector, which are used to prepare positive electrode plates and negative electrode plates, respectively. The positive electrode current collector in this application includes a composite current collector for positive electrode according to the first aspect of this application.

In this application, the "coating yield" of the current collector refers to a ratio of the length of qualified electrode plates produced in the cell coating process to the length of the input current collectors. The coating production yield can be calculated by recording the number of meters of qualified coated electrode plate that is produced through the coating process for the current collector of 100,000 meters. The "coating yield" of the current collector reflects the processability of the current collector in the cell coating process. A higher coating yield indicates better processability of the current collector.

In this application, the "fracture frequency in cold pressing" of the current collector refers to the number of fractures the current collector experienced per unit length in the cell cold pressing process, and the unit may be "times/km" or "km/time". The crack frequency in cold pressing of the current collector can be evaluated by recording the number of times the electrode plates cracked in the cold pressing process for 100,000-meter electrode plate with coated current collector. The "fracture frequency in cold pressing" of the current collector reflects the processability of the current collector in the cell cold pressing process. When the unit is "km/time", a higher value of the fracture frequency in cold pressing indicates less possibility of cracking, reflecting better processability of the current collector; and when the unit is "times/km", a lower value of the fracture frequency in cold pressing indicates less possibility of cracking, reflecting better processability of the current collector, where 1 km = 1000 m.

In some embodiments, the support layer is made of a polymer-based material or a polymer-based composite material. Optionally, the polymer component in the support layer includes one or more of polyimide, polyamide, polyethylene terephthalate, polybutylene terephthalate, polyethylene naphthalate, polycarbonate, polyethylene, polypropylene, polypropylene ethylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfur nitride polymer materials, polyphenyl, polypyrrole, polyaniline, polythiophene, polypyridine, cellulose, starch, protein, epoxy resins, phenolic resins, derivatives of the foregoing materials, cross-linked products of the foregoing materials, and copolymers of the foregoing materials.

In this application, unless otherwise specified, the "polymer-based material" is basically composed of polymers, and it can be understood that the introduction of inevitable impurities during processing is not excluded.

In this application, unless otherwise specified, the "polymer-based composite material" includes polymers with a weight proportion of greater than or equal to 50% and may also include one or more additives. Non-limiting examples of the additive may include one or more of metal materials, inorganic non-metal materials, and the like. In the "polymer-based composite material", the weight percentage of polymers is at least greater than or equal to 50%, further may be greater than or equal to 60%, furthermore may be greater than or equal to 70%, furthermore may be greater than or equal to 80%, furthermore may be greater than or equal to 85%, and furthermore may be greater than or equal to 90%, or may be any one of the following weight percentages, or may be greater than, or greater than or equal to any one of the following percentages and less than or equal to 100%, or may be selected from a range defined by any two of the following weight percentages: 50%, 60%, 70%, 80%, 85%, 90%, 95%, 96%, 97%, 98%, 99%, 100%, and the like. Non-limiting examples of the range defined by any two of the foregoing weight percentages are 50-100%, 60-100%, 70-100%, 80-100%, 90-100%, and the like. The weight percentage of polymers in the polymer-based composite material can satisfy any one of the foregoing suitable conditions, and it is preferable to obtain a superior ductility coefficient.

Additives in the polymer-based composite material can be suitably selected based on processing requirements and one or more requirements, such as performance requirements related to the positive electrode composite current collector, electrode plate, and cell.

The metal material additives may include but are not limited to one or more of aluminum, aluminum alloys, nickel, nickel alloys, titanium, titanium alloys, iron, iron alloys, silver, and silver alloys.

Inorganic non-metal materials may include but are not limited to one or more of carbon-based materials, alumina, silicon oxides, silicon nitrides, silicon carbides, boron nitrides, silicates, and titanium oxides, and may further include but are not limited to one or more of glass materials, ceramic materials, and ceramic composite materials, where the carbon-based materials may include but are not limited to one or more of graphite, superconducting carbon, acetylene black, carbon black, Ketjen black, carbon dots, carbon nanotubes, graphene, and carbon nanofibers.

In some embodiments, the foregoing additives may include one or more of a carbon-based material coated with a metal material, such as nickel-coated graphite powder and nickel-coated carbon fibers.

When a polymer material is selected as the main material of the support layer, the polymer has a lighter density and better ductility than the conductive metal, thereby reducing the surface density of the composite current collector for positive electrode so as to favorably increase the energy density of the cell and enhancing the overall ductility of the composite current collector for positive electrode so as to favorably improve the processing yield during the processing of electrode plates.

The main material of the support layer may or may not include materials other than polymers, or may form a composite material with other types of materials. As a polymer-based composite material, the main material can be suitably selected based on performance needs and in accordance with the processing requirements for the purpose of improving the processability of the composite current collector for positive electrode, cell performance, or a combination thereof. For example, the main material can improve one or more of the volume resistivity, elongation at break, Young's modulus, and other properties of the composite current collector for positive electrode.

In some embodiments, the polymer component in the support layer includes a polyimide, and further, the polyimide may include either or both of a homobenzene polyimide and a biphenyl polyimide.

In some embodiments, the polymer component in the support layer may include a biphenyl polyimide.

In some embodiments, the support layer includes a biphenyl polyimide with a mass proportion greater than or equal to 50%; optionally, the support layer includes a biphenyl polyimide with a mass proportion greater than or equal to 80%; and further optionally, the support layer is made of a biphenyl polyimide. The mass proportion of the biphenyl polyimide in the support layer may further be any one of the following percentages: 50%, 60%, 70%, 80%, 90%, 95%, 96%, 97%, 98%, 99%, 100%, and the like, or may be greater than, or greater than or equal to any of the foregoing percentages and less than or equal to 100%, or may be selected from a range defined by any two of the foregoing percentages, with non-limiting examples such as 50-100%, 60-100%, 70-100%, 80-100%, and 90-100%.

In some embodiments, the polymer component in the support layer is a combination of a homobenzene polyimide and a biphenyl polyimide. In some of these embodiments, the weight proportion of the biphenyl polyimide may be any one of the following percentages: 50%, 60%, 67%, 70%, 75%, 80%, 90%, 95%, 96%, 97%, 98%, 99%, 100%, and the like, or may be greater than, or greater than or equal to any of the foregoing percentages and less than or equal to 100%, or may be selected from a range defined by any two of the foregoing percentages, with non-limiting examples such as 50-100%, 60-100%, 70-100%, 80-100%, and 90-100%. In some other embodiments, the weight ratio of the biphenyl polyimide to the homobenzene polyimide may be any one of the following proportions or ratios, or may also be selected from a range defined by any two of the following proportions or ratios: 9: 1, 8:2, 7:3, 6:4, and the like.

Polyimide is an organic carbonyl polymer containing an imide ring in the main chain and has good mechanical properties and heat resistance, high mechanical strength, and good high-temperature resistance. The use of polyimide in the support layer can take advantage of its tensile strength at break, yield strength, and elastic modulus properties to better coordinate with the tensile strength at break and elastic modulus of the conductive layer, thereby better adjusting the ductility coefficient of the composite current collector for positive electrode, which is more advantageous for realizing the dual requirements of good energy density and superior processability of the composite current collector for positive electrode.

Both homobenzene polyimide and biphenyl polyimide have the foregoing common advantages of polyimide, where the biphenyl polyimide has more excellent high-temperature resistance and mechanical properties. Introduction of a biphenyl polyimide into the composite current collector for positive electrode, for example, used as a main material (≥ 50 wt%), is conducive to improvement of the high-temperature tensile performance of the composite current collector for positive electrode and maintenance of good flatness in cell preparation processes at high temperatures such as coating, decoding, and drying, and can further avoid defective products caused by curling, wrinkling, and even fracture due to volatilization of solvent, moisture, and the like, better improving the processing yield. As the operating speed of cell mass production equipment gradually increases, the drying temperature in the cell preparation process also gradually increases, and the improvement of high-temperature mechanical properties of the composite current collector for positive electrode also becomes more important for the manufacturing yield. In addition, the improvement of mechanical properties of the composite current collector for positive electrode is also conducive to reducing the cell contraction and expansion during charging and discharging, which is conducive to the integrity of the cell positive and negative electrode interfaces, and an increase in local interface side reactions caused by wrinkling of the electrode plate during charging and discharging can be reduced or avoided, which thereby is conducive to improving the cycling performance of the cell.

Compared with that prepared using a homobenzene polyimide as the main material of the support layer, the composite current collector for positive electrode prepared using a biphenyl polyimide as the main material of the support layer has significantly improved performance in one or more of the mechanical properties (for example, tensile strength, modulus of elasticity, and elongation at break), use properties (for example, coating yield, ductility in cold pressing, and fracture frequency in cold pressing), and cell performance (for example, cycling capacity retention rate).

In this application, the "ductility in cold pressing" of the current collector refers to a ratio of the ductile length of the cell electrode plate after cold pressing to the initial length ($L_{0C}$) of the cell electrode plate. The ductility in cold pressing of the electrode plate can be evaluated by measuring the ductile length of a 1 m-long electrode plate with coated current collector after cold pressing. In this case, ductility in cold pressing = (length of electrode plate after cold pressing - $L_{0C}$)/$L_{0C}$ × 100%, and $L_{0C}$ is taken as 1 m. The "ductility in cold pressing" of the current collector reflects the deformation of the current collector in the cell cold pressing process.

The use of a biphenyl polyimide as a support layer is conducive to significantly enhancing the mechanical strength of the composite current collector for positive electrode, further conducive to improving the yield in the cell

preparation process and the cell performance, and in addition, can also reduce the pinhole defect rate.

In some embodiments, the biphenyl polyimide used in this application contains a

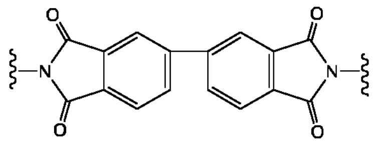

structure where adjacent groups are connected via two N atoms on two imide rings. Further, its infrared spectrum shows a vibrational peak in at least one of wave numbers 1618.65 $cm^{-1}$, 1420.2 $cm^{-1}$, 1218.98 $cm^{-1}$, 1420.2 $cm^{-1}$, 1218.98 $cm^{-1}$, 888.9 $cm^{-1}$, 695.72 $cm^{-1}$, and 673.08 $cm^{-1}$.

In some embodiments, the conductive layer includes a metal material, and optionally, the metal material includes one or more of aluminum and an aluminum alloy. The aluminum alloy contains doping elements in addition to primarily containing aluminum. The types of doping elements may include one or more of metal elements and non-metal elements, where the doping metal elements may include but are not limited to one or more of nickel, nickel, titanium, titanium, and silver, and the doping non-metal elements may include but are not limited to one or more of N, O, C, Si, and B. The weight proportion of the doping elements in the aluminum alloy may be less than or equal to 10%, and the weight proportion of the doping elements in the aluminum alloy may further be any one of the following percentages, or may be greater than 0 and less than or equal to any one of the following percentages, or may be selected from a range defined by any two of the following percentages: 0.1%, 0.5%, 1%, 2%, 3%, 4%, 5%, 6%, 7%, 8%, 9%, 10%, and the like.

It is advantageous to provide better electrical conductivity when the conductive layer includes a metal material. Further, when the metal material includes one or more of aluminum and an aluminum alloy, it is easier to control the ductility coefficient of the composite current collector for positive electrode in a suitable range. Further, it is also easier to control the parameters such as the tensile strength at break and elastic modulus of the conductive layer in a more suitable range, so as to better take into account the cell energy density and the processability of the composite current collector for positive electrode.

In some embodiments, the support layer may be a single-layer structure or a multilayer structure, as long as the requirements of the foregoing ductility coefficient and related parameters are met. When the support layer has a multi-layer structure, the material composition and distribution of the structural layers may be the same or different.

In some embodiments, the thickness $D_a$ of the composite current collector for positive electrode may be equal to d1 + d2, or may be greater than d1 + d2. When $D_a$ is greater than d1 + d2, the composite current collector for positive electrode further includes structural layers other than the foregoing support layer and the conductive layer.

The composite current collector provided in the first aspect is suitable for use as a positive electrode current collector, either independently as a positive electrode current collector in a positive electrode plate or as a partial structure of a positive electrode current collector in a positive electrode plate.

In the field of secondary batteries (for example, lithium-ion secondary batteries), typically, the positive electrode is more likely to use a material (for example, aluminum or an alloy thereof) resistant to oxidation as a conductive material of the positive electrode current collector, and the negative electrode is more likely to use a metal material (for example, copper or an alloy thereof) inert to lithium as a conductive material of the negative electrode current collector, where aluminum and copper as examples are both metal materials with high conductivity. Accordingly, there may be differences in the mechanical and physical properties of conductive layer metal materials of the positive electrode current collector and the negative electrode current collector, thus corresponding to different ductility coefficients. When the composite current collector for positive electrode according to the first aspect of this application is used as the positive electrode current collector, it is more conducive to utilizing the advantages of the foregoing embodiments.

According to a second aspect, this application provides a positive electrode plate including the composite current collector for positive electrode according to the first aspect of this application.

The positive electrode plate includes a positive electrode current collector. The positive electrode current collector includes at least the composite current collector for positive electrode according to the first aspect of this application.

In some embodiments, the positive electrode plate includes a composite current collector for positive electrode according to the first aspect of this application and a positive electrode film layer disposed on at least one side of the composite current collector for positive electrode. At least one of the positive electrode film layers includes a positive electrode active material layer, and any one of the positive electrode active material layers independently includes a positive electrode active substance.

In some embodiments, the composite current collector for positive electrode according to the first aspect of this application is used independently as the positive electrode current collector in the positive electrode plate according to the second aspect. In some other embodiments, the composite current collector for positive electrode according to the first

aspect of this application is used as part of the positive electrode current collector in the positive electrode plate according to the second aspect.

The positive electrode current collector of the positive electrode plate including the composite current collector for positive electrode according to the first aspect of this application (for example, the composite current collector for positive electrode according to the first aspect of this application being selected and used as the positive electrode current collector of the positive electrode plate) can have both good energy density and high mechanical strength, and may reduce or avoid an increase in local interface side reactions caused by wrinkling of the positive electrode plate during charging and discharging, thereby improving the battery cycling performance. Further, this is conducive to mitigating the cracking problem that may be caused by a gradual increase in the swelling force of the electrode plate in the later cell cycling stage and improving the cycling performance, safety, and reliability of the cell.

In some embodiments, the positive electrode active substance may be a positive electrode active substance known in the art and used for batteries. In a non-limiting example, the positive electrode active substance may include one or more of the following materials: olivine-structured lithium-containing phosphate, lithium transition metal oxide, or respective modified compounds thereof. However, this application is not limited to these materials, and may alternatively use other conventional materials or substance that can be used as the positive electrode active substance of the battery. One of these positive electrode active substances may be used alone, or two or more of them may be used in combination. Non-limiting examples of the lithium transition metal oxide may include but are not limited to one or more of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (or NCM333 for short), $LiNi_{0.5}Co_{0.2}Mn_{0.3}O_2$ (or NCM523 for short), $LiNi_{0.5}Co_{0.25}Mn_{0.25}O_2$ (or NCM211 for short), $LiNi_{0.6}Co_{0.2}Mn_{0.2}O_2$ (or NCM622 for short), and $LiNi_{0.8}Co_{0.1}Mn_{0.1}O_2$ (or NCM811 for short)), lithium nickel cobalt aluminum oxide (for example, $LiNi_{0.85}Co_{0.15}Al_{0.05}O_2$), and modified compounds thereof. Non-limiting examples of the olivine-structured lithium-containing phosphate may include but are not limited to one or more of lithium iron phosphate (for example, $LiFePO_4$ (or LFP for short)), composite materials of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In a non-limiting example, the positive electrode current collector has two opposite surfaces in its thickness direction, and further, the positive electrode film layer is disposed on either or both of the two opposite surfaces of the positive electrode current collector.

In some embodiments, the positive electrode film layer further optionally includes a binder. In a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. In a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared in the following manner: the foregoing components used for preparing the positive electrode plate, for example, the positive electrode active substance, the conductive agent, the binder, and any other components, are dispersed in a solvent to form a positive electrode slurry; and the positive electrode slurry is applied onto at least one side surface of the positive electrode current collector, followed by processes such as drying and compaction (the compaction may be achieved through cold pressing) to produce a positive electrode plate. The types of solvent in the positive electrode slurry may include but are not limited to N-methylpyrrolidone (NMP), and further, NMP may be used as a single solvent. The positive electrode slurry coated on the surface of the positive electrode current collector may be on a single surface or two surfaces of the positive electrode current collector. The solid content of the positive electrode slurry may be 40-80 wt%. The compacted density of the positive electrode plate may be 3.0-3.6 $g/cm^3$, optionally 3.3-3.5 $g/cm^3$.

In this application, wt% represents the weight percentage.

According to a third aspect, this application provides a secondary battery including at least one of the composite current collector for positive electrode according to the first aspect of this application and the positive electrode plate according to the second aspect of this application.

The secondary battery including the foregoing composite current collector for positive electrode or the foregoing positive electrode plate can have both good energy density and high mechanical strength, and may reduce or avoid an increase in local interface side reactions caused by wrinkling of the electrode plate during charging and discharging. Further, this is conducive to mitigating the cracking problem that may be caused by a gradual increase in the swelling force of the electrode plate in the later cell cycling stage and improving the cycling performance, safety, and reliability of the cell.

In some embodiments, the secondary battery includes the positive electrode plate according to the second aspect of this application, and further includes a negative electrode plate and a separator, where the separator is disposed

between the positive electrode plate and the negative electrode plate.

In this application, unless otherwise specified, the electrode plate may be a positive electrode plate or a negative electrode plate, and the "active substance" in the electrode plate refers to a substance capable of reversibly intercalating and deintercalating active ions. Unless otherwise specified, the "negative electrode active substance" refers to a substance that is used in the negative electrode plate and capable of reversibly intercalating and deintercalating active ions, and the "positive electrode active substance" refers to a substance that is used in the positive electrode plate and capable of reversibly intercalating and deintercalating active ions. During the charging of secondary batteries, active ions are deintercalated from the positive electrode and embedded into the negative electrode through the electrolyte; and during the discharging of secondary batteries, active ions are deintercalated from the negative electrode and embedded into the positive electrode. The active ions are not particularly limited and may be lithium ions, in which case the active ions correspond to a lithium-ion secondary battery.

In this application, the "active material" and the "active substance" have the same meaning and can be used interchangeably; the "positive electrode active substance" and the "positive electrode active material" have the same meaning and can be used interchangeably; and the "negative electrode active substance" and the "negative electrode active material" have the same meaning and can be used interchangeably.

In this application, unless otherwise specified, the "active material layer" includes a positive electrode active material layer of the positive electrode plate and a negative electrode active material layer of the negative electrode plate, and may refer to either the positive electrode active material layer or the negative electrode active material layer depending on the specific circumstance. It can be understood that the positive electrode active material layer includes a positive electrode active substance, and the negative electrode active material layer includes a negative electrode active substance.

Positive electrode plate

The positive electrode plate in the third aspect and the fourth aspect of this application may include the positive electrode plate according to the second aspect of this application.

In some embodiments of this application, the secondary battery is a lithium-ion secondary battery. The lithium-ion secondary battery utilizes the intercalation and deintercalation of lithium ions in the electrode and the transport of lithium ions in the electrolyte to achieve the charge and discharge process. Typically, but not exclusively, active ions in the lithium-ion secondary battery is lithium ions.

Negative electrode plate

The negative electrode plate includes a negative electrode current collector and a negative electrode film layer disposed on at least one surface of the negative electrode current collector, where the negative electrode film layer includes a negative electrode active substance.

In a non-limiting example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be produced by depositing a metal material on a polymer material matrix. In the negative electrode current collector, non-limiting examples of the metal materials may include one or more of copper, copper alloys, nickel, nickel alloys, titanium, titanium alloys, silver, and silver alloys, and the like. In the negative electrode current collector, non-limiting examples of the polymer material substrate may include a matrix such as one or more of polypropylene (PP), polyethylene terephthalate (PET), polybutylene terephthalate (PBT), polystyrene (PS), and polyethylene (PE).

In some embodiments, the negative electrode active substance may be a negative electrode active substance known in the art and used for batteries. In a non-limiting example, the negative electrode active substance may include one or more of the following materials: artificial graphite, natural graphite, soft carbon, hard carbon, silicon-based materials, tin-based materials, lithium titanate, and the like. The silicon-based material may include one or more of elemental silicon, silicon-oxygen compounds, silicon-carbon composites, silicon-nitrogen composites, and silicon alloys. The tin-based material may include one or more of elemental tin, tin oxide compounds, and tin alloys. However, this application is not limited to these materials, and may alternatively use other conventional materials that can be used as the negative electrode active substance of the battery. One of these negative electrode active substances may be used alone, or two or more of them may be used in combination.

In some embodiments, the negative electrode film layer further optionally includes a binder. The binder may include one or more of styrene-butadiene rubber (SBR), polyacrylic acid (PAA), polyacrylic acid sodium (PAAS),

polyacrylamide (PAM), polyvinyl alcohol (PVA), sodium alginate (SA), polymethacrylic acid (PMAA), and carboxymethyl chitosan (CMCS).

In some embodiments, the negative-electrode film layer further optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative electrode film layer may further optionally include another promoter such as a thickener. Non-limiting examples of thickeners may include sodium carboxymethyl cellulose (CMC-Na).

In some embodiments, the negative electrode plate may be prepared in the following manner: The components used for preparing the negative electrode plate, for example, the negative electrode active substance, the conductive agent, the binder, and any other components, are dispersed in a solvent (a non-limiting example of solvent is, for example, deionized water) to form a negative electrode slurry; and the negative electrode slurry is applied onto at least one side surface of the negative electrode current collector, followed by processes such as drying and compaction (the compaction may be achieved through cold pressing), to prepare a negative electrode plate. The negative electrode slurry coated on the surface of the negative electrode current collector may be on a single surface or two surfaces of the negative electrode current collector. The solid content of the negative electrode slurry may be 40-60 wt%. The compacted density of the negative electrode plate may be 1.4-1.75 g/$cm^3$, further optionally 1.5-1.7 g/$cm^3$.

<u>Electrolyte</u>

The electrolyte has the effect of conducting active ions between the positive electrode plate and the negative electrode plate. The electrolyte is not particularly limited to any type in this application, and may be selected according to requirements. For example, the electrolyte may be in a liquid state, a gel state, or an all-solid state.

In some embodiments, the electrolyte is a liquid electrolyte. The liquid electrolyte includes an electrolytic salt and a solvent. In lithium-ion secondary batteries, the electrolyte salt may include an electrolyte lithium salt.

In some embodiments, the electrolytic salt may include one or more of lithium hexafluorophosphate ($LiPF_6$), lithium tetrafluoroborate ($LiBF_4$), lithium perchlorate ($LiClO_4$), lithium hexafluoroarsenate, lithium bis(fluorosulfonyl)imide (LiFSI), lithium bistrifluoromethanesulfonimide (LiTFSI), lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent is an organic solvent.

In some embodiments, the organic solvent includes one or more of esters, carbonates, and ethers. In some of these embodiments, the organic solvent includes an ester. The carbonate solvent may include one or more of carbonates and halogenated carbonates. Non-limiting examples of organic solvents are, for example, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), and the fluorinated compounds of any one of the foregoing.

In some embodiments, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In a non-limiting example, the ether organic solvent may include one or more of tetrahydrofuran (THF), dimethoxymethane (DMM), 1,2-dimethoxyethane (DME), 1,2-dimethoxypropane (DMP), diglyme (DG), and the like.

In some embodiments, the liquid electrolyte further optionally includes an additive. For example, the additives may be used to improve the solid electrolyte interface (SEI) film performance, and may for example include at least one of a negative electrode film-forming additive and a positive electrode film-forming additive; and the additives may also include additives capable of improving some properties of the battery, for example, an additive for improving overcharge performance of the battery, an additive for improving high-temperature or low-temperature performance of the battery, and an additive for improving conductivity.

In some embodiments, the additives may include one or more of vinylidene carbonate (VC), vinyl ethylene carbonate (VEC), fluoroethylene carbonate (FEC), difluoroethylene carbonate (DFEC), trifluoropropylene carbonate (TFPC), methylene methane disulphonate (MMDS), 1-propenyl-1,3-sultone (PST), ethylene sulfite (ES), propylene sulfite (PS), 1,3,2-dioxathiolane-2,2-dioxide (DTD), succinonitrile (SN), adiponitrile (AND), sulfonate cyclic quaternary ammonium salt, tris(trimethylsilyl) phosphate (TMSP), and tris(trimethylsilyl) borate (TMSB), and anisole.

## Separator

In some embodiments, the secondary battery further includes a separator. The separator is not limited to any particular type in this application, and may be any well-known porous separator with good chemical stability and mechanical stability.

In some embodiments, the material of the separator may include one or more of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

## Electrode assembly, electrochemical energy storage apparatus, secondary battery, and electric apparatus

In some embodiments, the positive electrode plate, the negative electrode plate, and the separator may be made into an electrode assembly through winding or stacking.

In some embodiments, the electrochemical energy storage apparatus may include an outer package. The outer package may be used for packaging the electrode assembly and the electrolyte.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. The material of the soft package may be plastic, and further, non-limiting examples of the plastic may include one or more of polypropylene, polybutylene terephthalate, and polybutylene succinate.

This application does not impose any special limitations on a shape of the secondary battery, and the secondary battery may be cylindrical, rectangular, or of any other shapes. For example, FIG. 3 shows a secondary battery 5 of a rectangular structure as an example.

In some embodiments, referring to FIG. 4, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or stacking. The electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

According to a fourth aspect, this application provides an electric apparatus including at least one of the composite current collector for positive electrode according to the first aspect of this application, the positive electrode plate according to the second aspect of this application, and the secondary battery according to the third aspect of this application.

The secondary battery may be used as a power source of the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

As the electric apparatus, a secondary battery pack may be selected according to requirements for using the electric apparatus.

FIG. 5 shows an electric apparatus 6 as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

According to a fifth aspect, this application provides a preparation method of the composite current collector for positive electrode according to the first aspect of this application, including the following step: forming the conductive layer on at least one side of the support layer so as to produce the composite current collector for positive electrode.

The composite current collector for positive electrode prepared by using the support layer with a specific thickness d1, a specific tensile strength at break T1, a specific yield strength Q1, and a specific elastic modulus G1 and the conductive layer further formed with a specific thickness d2, a specific tensile strength at break T2, and a specific elastic modulus G2 has a higher ductility coefficient, a higher elongation at break, and better mass production processability. This is conducive to reducing the fracture of composite current collectors for positive electrode and improving the processing

yield during the processing of electrode plates, and an increase in local interface side reactions caused by wrinkling of the electrode plate during charging and discharging can also be reduced or avoided, thereby improving the cycling performance of the battery. This is also conducive to mitigating the cracking problem at the cell level that may be caused by a gradual increase in the swelling force of the electrode plate in the later cell cycling stage, which is conducive to improving the cycling performance, safety, and reliability of the cell.

The method of forming the conductive layer on at least one side of the support layer may include but is not limited to one or more of physical deposition (for example, vapor deposition) technology, chemical deposition technology, electroplating, spraying, casting, and hot pressing.

It will be appreciated that the conductive layer may be formed on at least one side surface of the support layer, but is not limited thereto.

According to a sixth aspect, this application provides a preparation method of positive electrode plate, including the following steps: applying a positive electrode slurry on at least one side surface of the composite current collector for positive electrode according to the first aspect of this application, followed by drying and cold pressing, to produce the positive electrode plate.

For the preparation method of positive electrode plate provided in this aspect, reference may also be made to the second aspect of this application.

The drying step after the positive electrode slurry is coated may be performed in a conventional manner in the art. For example, the drying may be carried out at 90-120°C.

The cold pressing step after the coating layer is dried may be performed in a conventional manner in the art, and the positive electrode plate having a predetermined compacted density may be produced after cold pressing. For non-limiting examples of the compacted density of the positive electrode plate, reference may be made to the context of this application.

When the positive electrode plate is prepared using the composite current collector for positive electrode according to the first aspect of this application, the positive electrode plate prepared can have both good energy density and high mechanical strength, and may reduce or avoid an increase in local interface side reactions caused by wrinkling of the electrode plate during charging and discharging, thereby improving the cycling performance of the battery. For the secondary battery further prepared and including the foregoing composite current collector for positive electrode or the foregoing positive electrode plate, this is also conducive to mitigating the cracking problem that may be caused by a gradual increase in the swelling force of the electrode plate in the later cell cycling stage and improving the cycling performance, safety, and reliability of the cell.

The following describes some examples of this application. The examples described below are illustrative and only used for explaining this application, and cannot be construed as limitations on this application. Examples with no technology or condition specified are made in accordance with the foregoing descriptions, in accordance with technologies or conditions described in literature in the art, or in accordance with product instructions. Reagents or instruments used without indicating the manufacturer are conventional products that is commercially available or can be synthesized in a conventional manner from commercially available products.

**Preparation of positive electrode current collector**

1.1. Preparation of positive electrode current collector

Referring to Tables 1 and 2, materials for support layers and conductive layers in Examples 1-21 and Comparative examples 1-7 were selected to prepare positive electrode current collectors; and parameters other than those in Tables 1 and 2 were basically the same in Examples 1-21 and Comparative examples 1-7 and can be suitably adjusted to satisfy the requirements of each preparation parameter in Tables 1 and 2.

Preparation method of positive electrode current collector using Example 1 as an example: A 12 μm PET base film roll material was used (as a support layer), and a 2 μm Al layer (as a conductive layer, 1 μm thick on one side each) was deposited on its front and back surfaces by vacuum vapor deposition technology to produce a 14 μm aluminum composite current collector, designated as "14 μm AP." A vacuum vapor deposition equipment (Baofeng FZZ-1650) was used, in which the vacuum was controlled to be less than or equal to $1 \times 10^{-3}$ Pa, the film traveling speed was 300 m/min, the Al wire feed was 500 mm/min, the heating power was 5-9 kW, and the thickness of single deposition was about 50 nm. The thickness of the aluminum metal layer reached 1 μm on each single side by front and back deposition 20 times. The composite current collector prepared was used as the positive electrode current collector in Example 1.

In **Example 20,** a method basically the same as that in Example 1 was used to prepare the positive electrode current collector except that an aluminum alloy (model 4043) was used to prepare the conductive layer.

In **Example 21,** a method basically the same as that in Example 1 was used to prepare the positive electrode current collector except that an aluminum alloy (model 4032) was used to prepare the conductive layer.

In **Comparative example 8,** no support layer was provided, and an aluminum foil (Al foil) of about 15 μm

thickness was used as the positive electrode current collector (denoted as "15 μm Al"), which can be seen in Table 1.

### 1.2. Parameter control

(1) Measurement of support layer thickness and conductive layer thickness

The composite current collector for positive electrode was subjected to an Ar-ion cross-section polishing (JEOL IB 19500CP) and then magnified 10,000 times using a scanning electron microscope (JEOL IB-19500), so as to measure the thicknesses of the base film (support layer) and metal layer (conductive layer) in the composite current collector for positive electrode.

(2) Tests for yield strength, tensile strength, elastic modulus, and elongation at break

Tensile tests were conducted using an INSTRON 3365 tensile machine to measure tensile properties of the polymer-based film, the metal conductive layer, and the composite current collector for positive electrode, where the sample had a width of 15 mm, a length of 150 mm, a tensile distance of 50 mm, and a tensile speed of 50 mm/min; where

$$\text{yield strength} = \text{tensile force at yield point/sample cross-sectional area;}$$

where sample cross-sectional area = 15 mm × sample thickness;

$$\text{tensile strength at break} = \text{tensile force at break point/sample cross-sectional area;}$$

where sample cross-sectional area = 15 mm × sample thickness;

$$\text{elongation at break} = (\text{length of sample when stretched to break} - 50)/50 \times 100\%;$$

where the unit of the length of the sample stretched to break was mm, the same as the unit of the tensile distance; and

$$\text{elastic modulus} = \text{tensile strength measured at ductility of } 1\%/1\%;$$

where elastic modulus = tensile strength at elastic deformation stage/corresponding elongation, and for convenience of calculation, the tensile strength measured at the ductility of 1% (elastic deformation stage)/1% is taken for calculation.

In addition, since the conductive layer was thin, the conductive layer was prepared as a sample having a consistent thickness (in the range of 10-100 μm) for tensile testing.

### Assembling secondary battery:

The NCM811 positive electrode material/graphite negative electrode material chemical system 60 Ah cells were selected for evaluation. The composite current collector produced in each example was applied to the preparation of positive electrode plate, where the coating weight of an active substance on the positive electrode plate was 20 mg/cm$^2$, the weight proportion of the positive electrode active substance in the positive electrode slurry was 97%, and the compacted density was 3.5 g/cm$^3$. The current collector for negative electrode plate was a 6 μm Cu foil with a coating weight of 12 mg/cm$^2$, the weight proportion of the negative electrode active substance in the negative electrode slurry was 96.5%, and the compacted density was 1.65 g/cm$^3$. A 7 μm polypropylene separator was used, and a solution made of 1 M lithium hexafluorophosphate ($LiPF_6$) dissolved in ethylene carbonate/ethyl methyl carbonate (EC/EMC) was used as the electrolyte.

**Table 1. Positive electrode current collector**

| Structure | Positive electrode current collector | | Support layer | | Conductive layer | | |
|---|---|---|---|---|---|---|---|
| Item | Abbreviated name | Thickness (μm) | Material | Thickness (μm) | Material | Total thickness (μm) | Unilateral thickness (μm) |
| Symbol | | $D_a$ | | d1 | | d2 | $d2_s$ |
| Example 1 | 14 μm AP | 14 | PET | 12 | Al | 2 | 1 |
| Example 2 | 10 μm AP | 10 | PET | 8 | Al | 2 | 1 |
| Example 3 | 8 μm AP | 8 | PET | 6 | Al | 2 | 1 |
| Example 4 | 8 μm AP | 7 | PET | 6 | Al | 1 | 0.5 |
| Example 5 | 8 μm AP | 7.6 | PET | 6 | Al | 1.6 | 0.8 |
| Example 6 | 8 μm AP | 9 | PET | 6 | Al | 3 | 1.5 |
| Example 7 | 8 μm AP | 8 | PET | 6 | Al | 2 | 1 |
| Example 8 | 8 μm AP | 8 | PEN | 6 | Al | 2 | 1 |
| Example 9 | 8 μm AP | 8 | PI-1 | 6 | Al | 2 | 1 |
| Example 10 | 8 μm AP | 8 | PI-2 | 6 | Al | 2 | 1 |
| Example 11 | 6 μm AP | 6 | PEN | 4 | Al | 2 | 1 |
| Example 13 | 6 μm AP | 6 | PI-1 | 4 | Al | 2 | 1 |
| Example 14 | 6 μm AP | 6 | PI-2 | 4 | Al | 2 | 1 |
| Example 15 | 8 μm AP | 8 | PET | 6 | Al | 2 | 1 |
| Example 16 | 8 μm AP | 8 | PET | 6 | Al | 2 | 1 |
| Example 17 | 8 μm AP | 8 | PET | 6 | Al | 2 | 1 |
| Example 18 | 8 μm AP | 6.6 | PET | 6 | Al | 0.6 | 0.3 |
| Example 19 | 17 μm AP | 17 | PET | 15 | Al | 2 | 1 |
| Example 20 | 8 μm AP | 8 | PET | 6 | Al alloy 4043 | 2 | 1 |
| Example 21 | 8 μm AP | 8 | PET | 6 | Al alloy 4032 | 2 | 1 |
| Comparative example 1 | 6 μm AP | 6 | PET | 4 | Al | 2 | 1 |
| Comparative example 2 | 4 μm AP | 4 | PET | 2 | Al | 2 | 1 |
| Comparative example 3 | 8 μm AP | 8 | PET | 6 | Al | 2 | 1 |
| Comparative example 4 | 8 μm AP | 10 | PET | 6 | Al | 4 | 2 |
| Comparative example 5 | 8 μm AP | 8 | PET | 6 | Al | 2 | 1 |
| Comparative example 6 | 6 μm AP | 6 | PET | 4 | Al | 2 | 1 |
| Comparative example 7 | 8 μm AP | 8 | PET | 6 | Al | 2 | 1 |
| Comparative example 8 | 15 μm Al | \ | \ | \ | Al | 15 | \ |

In Table 1, PET represents polyethylene terephthalate, PEN represents polyethylene naphthalate, PI-1 represents homobenzene polyimide, and PI-2 represents biphenyl polyimide.

Table 2. Positive electrode current collector

| Structure | Support layer | | | | Conductive layer | | Positive electrode current collector | |
|---|---|---|---|---|---|---|---|---|
| Item | Elastic modulus (GPa) | Yield strength (MPa) | Tensile strength at break (MPa) | Elongation at break | Elastic modulus (GPa) | Tensile strength at break (MPa) | Distribution coefficient | Current collector ductility coefficient (Pa·m) |
| Symbol | G1 | Q1 | T1 | | G2 | T2 | α | |
| Example 1 | 4 | 101 | 241 | 101% | 33 | 200 | 0.108 | 2399 |
| Example 2 | 4 | 99 | 238 | 102% | 33 | 200 | 0.108 | 1458 |
| Example 3 | 4 | 102 | 241 | 101% | 33 | 200 | 0.108 | 1025 |
| Example 4 | 4 | 100 | 240 | 99% | 33 | 200 | 0.108 | 1199 |
| Example 5 | 4 | 101 | 239 | 100% | 33 | 203 | 0.108 | 1082 |
| Example 6 | 4 | 102 | 238 | 103% | 33 | 202 | 0.108 | 821 |
| Example 7 | 4.2 | 111 | 302 | 85% | 33 | 199 | 0.113 | 1382 |
| Example 8 | 4.5 | 122 | 321 | 72% | 33 | 197 | 0.120 | 1481 |
| Example 9 | 6 | 181 | 366 | 53% | 33 | 201 | 0.154 | 1689 |
| Example 10 | 8 | 222 | 541 | 45% | 33 | 202 | 0.195 | 2663 |
| Example 11 | 4.5 | 119 | 320 | 72% | 33 | 200 | 0.120 | 873 |
| Example 13 | 6 | 181 | 367 | 53% | 33 | 203 | 0.154 | 1018 |
| Example 14 | 8 | 222 | 542 | 45% | 33 | 201 | 0.195 | 1668 |
| Example 15 | 4 | 101 | 241 | 103% | 35 | 201 | 0.103 | 985 |
| Example 16 | 4 | 102 | 240 | 98% | 37 | 199 | 0.098 | 945 |
| Example 17 | 4 | 99 | 242 | 102% | 30 | 200 | 0.118 | 1061 |
| Example 18 | 4 | 103 | 239 | 103% | 33 | 203 | 0.108 | 1260 |
| Example 19 | 4 | 101 | 242 | 101% | 33 | 222 | 0.108 | 3106 |
| Example 20 | 4 | 99 | 240 | 101% | 34 | 241 | 0.105 | 1000 |
| Example 21 | 4 | 100 | 241 | 102% | 28 | 182 | 0.125 | 1091 |
| Comparative example 1 | 4 | 101 | 241 | 101% | 33 | 201 | 0.108 | 558 |
| Comparative example 2 | 4 | 101 | 239 | 103% | 33 | 202 | 0.108 | 96 |
| Comparative example 3 | 4 | 95 | 201 | 111% | 33 | 211 | 0.108 | 786 |
| Comparative example 4 | 4 | 102 | 241 | 100% | 33 | 160 | 0.108 | 663 |
| Comparative example 5 | 3.8 | 90 | 182 | 121% | 33 | 203 | 0.103 | 674 |
| Comparative example 6 | 4.2 | 111 | 298 | 85% | 33 | 202 | 0.113 | 785 |
| Comparative example 7 | 4 | 100 | 239 | 100% | 45 | 201 | 0.082 | 777 |

(continued)

| Structure | Support layer | | | | Conductive layer | | Positive electrode current collector | |
|---|---|---|---|---|---|---|---|---|
| Item | Elastic modulus (GPa) | Yield strength (MPa) | Tensile strength at break (MPa) | Elongation at break | Elastic modulus (GPa) | Tensile strength at break (MPa) | Distribution coefficient | Current collector ductility coefficient (Pa·m) |
| Symbol | G1 | Q1 | T1 | | G2 | T2 | α | |
| Comparative example 8 | \ | \ | \ | \ | 33 | 201 | \ | \ |

In Table 2, the ductility coefficient is equal to (d1 × T1 - (d2 × T2) × (1 - α) - d1 × Q1 × α); and the distribution coefficient is α = G1/(G1 + G2).

**Test methods and analysis**

**1. Processing performance characterization**

1.1. Coating production yield, also denoted as coating yield or production yield

The coating production yield was calculated by recording the number of meters of qualified coated electrode plate that was produced through the coating process for the positive electrode current collector of 100,000 meters.

1.2. Crack frequency in cold pressing, also denoted as fracture frequency in cold pressing

The crack frequency in cold pressing of the positive electrode current collector was evaluated by recording the number of times the electrode plates cracked in the cold pressing process for 100,000-meter electrode plate with coated positive electrode current collector, and a higher value in the unit of km/time indicates less possibility of cracking.

1.3. Ductility in cold pressing

The ductility in cold pressing of the electrode plate was evaluated by measuring the ductile length of a 1 m-long positive electrode plate with coated current collector after cold pressing, where ductility in cold pressing = (length of electrode plate after cold pressing - 1)/1 × 100%, where the unit of the length of electrode plate after cold pressing is meter (m), and the ductility in cold pressing of each example is determined by taking an average of five measurements.

2. Battery performance characterization

2.1. Cell energy density

A battery tester (Neware 5V100A) was used to evaluate the cycling performance of the battery by performing charge/discharge tests on cells prepared in the examples and comparative examples, where the voltage range tested was 4.25-2.5 V, and the charge/discharge current rate was 1C/1C, where
energy density of battery = first capacity of battery at 1C current density × voltage plateau/weight of cell, where the capacity of cell and the voltage plateau were read directly from the charge/discharge data, and the weight of cell was measured using a three-digit decimal precision balance.

2.2. Cell cycling performance

The cell cycle count of a battery was the number of cycles counted when the capacity of the cell decayed to 80% of the capacity of the cell at the first cycle.

**Test results and analysis**

For the tensile strength at break and the elongation at break of the positive electrode current collector prepared in

each of the foregoing examples and comparative examples, refer to Table 3. For the test results of the cell energy density and the cell cycling performance of the secondary battery prepared in each of the foregoing examples and comparative examples, refer to Table 3.

The tensile strength at break and the elongation at break of the positive electrode current collector in the positive electrode plate have the following physical meanings, respectively: The tensile strength at break refers to a ratio of the maximum stress withstood by the positive electrode current collector before fracture to the cross-sectional area of the collector before stretching, and the elongation at break refers to a ratio of the tensile length of the current collector measured when being stretched to break to the length before stretching. Higher tensile strength at break and elongation at break of the positive electrode current collector indicate that the current collector has better processing performance and is less likely to fracture in the cell preparation process.

The composite current collectors for positive electrode prepared in Examples 1-18, 20, and 21 of this application all show high tensile strength at break, elongation at break, good processability, and good energy density. In Example 19, the support layer is a little thicker than those in the other examples, and the composite current collector for positive electrode prepared all show high tensile strength at break and elongation at break, and good processability, with specific energy density. It should be noted that Example 19 still shows certain advantages in energy density as compared to current collectors in low energy density without a support layer (conventional aluminum foil). For test results of a conventional aluminum foil positive electrode current collector, refer to Comparative example 8.

Examples 1-21 all also show superior cell cycling performance and have cycles of above 900 counted when the capacity decayed to 80%, where the number of cycles in Examples 1-17 and 19-21 are all above 1200 and even above 1300. In Example 18, the conductive layer is a little thicker than those in the other examples, and the number of cycles counted when the capacity decayed to 80% is lower than those in Examples 1-17 and 19-21, but is still increased to a certain degree in comparison with those in the Comparative examples 1-7.

Examples 1-21 all show a high coating production yield, a high ductility in cold pressing, and a high crack frequency in cold pressing in unit of "km/time" (that is, less possibility of cracking), where the coating production yield in Examples 1-21 is above 70%, generally above 80%, mostly above 90%, and greater than or equal to 99% in some examples; the ductility in cold pressing in Examples 1-21 is generally greater than or equal to 0.8% (and further generally greater than or equal to 1.0%), of which the ductility in cold pressing in Examples 1-17 and 20-21 is greater than or equal to 1.1%; and the crack frequency in cold pressing in Examples 1-21 is greater than or equal to 3 km/time, indicating less possibility of cracking.

The ductility coefficients of the composite current collectors in the positive electrode plates in Comparative examples 1-7 are all lower than 800 Pa·m. In this case, the tensile strength at break of the composite current collector generally decreases and the elongation at break is significantly reduced, resulting in overall poorer mechanical properties and significantly poorer processability of the composite current collectors; and the coating production yield is lower than 60% in all comparative examples, less than 10% in Comparative example 2 and less than 30% in Comparative example 1.

Although in Comparative example 1 and Comparative example 6, the parameters such as the thickness d1, tensile strength at break T1, yield strength Q1, and elastic modulus G1 of the support layer, the total thickness d2, tensile strength at break T2, and elastic modulus G2 of the conductive layer, and the distribution coefficient $\alpha$ of the composite current collector are in the ranges of those parameters in Examples 1-21, the fact that the ductility coefficient of the composite current collector is lower than 800 Pa·m leads to significantly decreased overall mechanical properties of the composite current collector, significantly poorer processability, and relatively low coating production yield and crack frequency in cold pressing.

The support layer in Comparative example 2 is thinner, the conductive layer in Comparative example 4 is thicker, the tensile strength at break T1 of the support layer in Comparative example 5 is relatively low, and the elastic modulus G2 of the conductive layer in Comparative example 7 is too high. All these have led to a composite current collector with a ductility coefficient lower than 800 Pa·m. The composite current collectors prepared show significantly decreased overall mechanical properties, significantly poorer processability, and relatively low coating production yield and crack frequency in cold pressing.

On the basis of Example 3, only the yield strength Q1 of the support layer is fine-tuned in Comparative example 3 from 100 MPa to 95 MPa, leading to a composite current collector with a ductility coefficient lower than 800 Pa·m. The composite current collector prepared shows significantly decreased overall mechanical properties, significantly poorer processability, and relatively low coating production yield and crack frequency in cold pressing.

**Table 3**

| Test items | Tensile strength at break of positive electrode current collector | Elongation at break of positive electrode current collector | Coating production yield of positive electrode current collector | Ductility in cold pressing of positive electrode current collector | Crack frequency in cold pressing of positive electrode current collector (km/time) | Cell energy density (Wh/Kg) | Cell cycle count |
|---|---|---|---|---|---|---|---|
| Example 1 | 201 | 65% | 99.0% | 1.1% | 20 | 254.6 | 1853 |
| Example 2 | 187 | 52% | 98.5% | 1.3% | 18 | 262.4 | 1802 |
| Example 3 | 175 | 22% | 90.0% | 1.5% | 7 | 266.3 | 1754 |
| Example 4 | 201 | 63% | 98.8% | 2.4% | 20 | 267.2 | 1326 |
| Example 5 | 184 | 38% | 96.4% | 2.2% | 13 | 266.7 | 1684 |
| Example 6 | 155 | 12% | 71.0% | 1.1% | 4 | 265.9 | 1708 |
| Example 7 | 220 | 44% | 95.2% | 1.5% | 13 | 266.2 | 1785 |
| Example 8 | 235 | 48% | 97.2% | 1.4% | 15 | 265.5 | 1820 |
| Example 9 | 270 | 46% | 96.3% | 1.2% | 14 | 265.7 | 1835 |
| Example 10 | 400 | 38% | 93.2% | 1.1% | 12 | 265.4 | 1812 |
| Example 11 | 208 | 13% | 73.0% | 1.8% | 3 | 267.9 | 1581 |
| Example 13 | 240 | 20% | 88.3% | 1.5% | 7 | 267.8 | 1608 |
| Example 14 | 355 | 30% | 91.4% | 1.3% | 10 | 267.6 | 1633 |
| Example 15 | 175 | 17% | 82.0% | 1.4% | 6 | 266.4 | 1725 |
| Example 16 | 175 | 15% | 76.0% | 1.3% | 4 | 266.1 | 1683 |
| Example 17 | 175 | 26% | 92.0% | 1.8% | 10 | 266.3 | 1782 |
| Example 18 | 213 | 68% | 99.2% | 2.7% | 22 | 264.6 | 946 |
| Example 19 | 207 | 73% | 99.3% | 1.0% | 25 | 246.2 | 1875 |
| Example 20 | 175 | 18% | 83.0% | 1.4% | 6 | 265.8 | 1620 |
| Example 21 | 175 | 28% | 92.5% | 1.9% | 12 | 265.4 | 1353 |
| Comparative example 1 | 155 | 2.3% | 24.6% | 2.0% | 0.5 | 268.1 | 708 |
| Comparative example 2 | 115 | 1.2% | 5.3% | 2.3% | 0.1 | 270.4 | 349 |
| Comparative example 3 | 145 | 6.7% | 45.5% | 1.5% | 0.9 | 266.3 | 852 |
| Comparative example 4 | 139 | 4.5% | 33.8% | 1.0% | 0.8 | 262.3 | 830 |
| Comparative example 5 | 130 | 4.4% | 32.7% | 1.6% | 0.8 | 266.7 | 809 |
| Comparative example 6 | 195 | 8.4% | 57.4% | 1.9% | 1.2 | 268.2 | 893 |
| Comparative example 7 | 175 | 7.8% | 53.2% | 1.1% | 1 | 266.2 | 842 |
| Comparative example 8 | 220 | 4.0% | 99.50% | 0.6% | 50 | 241.3 | 1791 |

In Table 3, the cell cycle count of a battery was the number of cycles counted when the capacity of the cell decayed

to 80% of the capacity of the cell at the first cycle.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. The foregoing embodiments only represent several implementations of this application, and the descriptions thereof are detailed but should not be construed as a limitation on the patent scope of this application. In addition, without departing from the essence of this application, various modifications made to the embodiments that can be conceived by persons skilled in the art, and other manners constructed by combining some of the constituent elements in the embodiments are also included in the scope of this application. It should be noted that those of ordinary skill in the art may further make several modifications and improvements without departing from the concept of this application, and these modifications and improvements also fall within the protection scope of this application. Therefore, the protection scope of this application should be subject to the appended claims, and the specification and the accompanying drawings may be used to explain the contents of the claims.

## Claims

**1.** A composite current collector for positive electrode comprising a support layer and a conductive layer disposed on at least one side of the support layer, the support layer being an organic support layer; wherein

the support layer has a thickness denoted as d1, a tensile strength at break denoted as T1, a yield strength denoted as Q1, and an elastic modulus denoted as G1;
the conductive layer has a total thickness denoted as d2, a tensile strength at break denoted as T2, and an elastic modulus denoted as G2; and
the composite current collector for positive electrode satisfies the following condition: $(d1 \times T1 - (d2 \times T2) \times (1 - \alpha) - d1 \times Q1 \times \alpha) \geq 800$ Pa·m, wherein $\alpha = G1/(G1 + G2)$.

**2.** The composite current collector for positive electrode according to claim 1, wherein the thickness d1 of the support layer is 4-15 μm;

optionally, the thickness d1 of the support layer is 4-12 μm; and
further optionally, the thickness d1 of the support layer is 4-6 μm.

**3.** The composite current collector for positive electrode according to claim 1 or 2, wherein the tensile strength at break T1 of the support layer is greater than or equal to 200 MPa; and
optionally, the tensile strength at break T1 of the support layer is greater than or equal to 300 MPa.

**4.** The composite current collector for positive electrode according to any one of claims 1 to 3, wherein the yield strength Q1 of the support layer is greater than or equal to 90 MPa; and
optionally, the yield strength Q1 of the support layer is greater than or equal to 150 MPa.

**5.** The composite current collector for positive electrode according to any one of claims 1 to 4, wherein the composite current collector for positive electrode satisfies any one or any plurality of the following features:

the total thickness d2 of the conductive layer is 0.6-3 μm; optionally, the total thickness d2 of the conductive layer is 1-3 μm; and further optionally, the total thickness d2 of the conductive layer is 1.4-2.4 μm;
the unilateral thickness d2, of the conductive layer is 0.3-1.5 μm; optionally, the unilateral thickness d2, of the conductive layer is 0.5-1.5 μm; and further optionally, the unilateral thickness d2, of the conductive layer is 0.7-1.2 μm; and
a thickness $D_a$ of the composite current collector for positive electrode is 3-17 μm; optionally, the thickness $D_a$ of the composite current collector for positive electrode is 3-14 μm; and further optionally, the thickness $D_a$ of the composite current collector for positive electrode is 3.4-8.4 μm.

**6.** The composite current collector for positive electrode according to any one of claims 1 to 5, wherein the tensile

strength at break T2 of the conductive layer is greater than or equal to 150 MPa; and
optionally, the tensile strength at break T2 of the conductive layer is greater than or equal to 200 MPa.

**7.** The composite current collector for positive electrode according to any one of claims 1 to 6, wherein the composite current collector for positive electrode satisfies any one or any plurality of the following features:

the elastic modulus G1 of the support layer is greater than or equal to 3 GPa; and optionally, the elastic modulus G1 of the support layer is greater than or equal to 4 GPa;
the elastic modulus G2 of the conductive layer is 25-40 GPa; and optionally, the elastic modulus G2 of the conductive layer is 25-35 GPa; and
$\alpha$ is 0.024-0.43; optionally, $\alpha$ is 0.095-0.300; and further optionally, $\alpha$ is 0.105-0.250.

**8.** The composite current collector for positive electrode according to any one of claims 1 to 7, wherein $(d1 \times T1 - (d2 \times T2) \times (1 - \alpha) - d1 \times Q1 \times \alpha) \geq 1000$ Pa m; and
optionally,

$$(d1 \times T1 - (d2 \times T2) \times (1 - \alpha) - d1 \times Q1 \times \alpha) \geq 1650 \text{ Pa} \cdot \text{m}.$$

**9.** The composite current collector for positive electrode according to any one of claims 1 to 8, wherein the support layer is made of a polymer-based material or a polymer-based composite material; and
optionally, the polymer component in the support layer comprises one or more of polyimide, polyamide, polyethylene terephthalate, polybutylene terephthalate, polyethylene naphthalate, polycarbonate, polyethylene, polypropylene, polypropylene ethylene, acrylonitrile-butadienestyrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfur nitride polymer materials, polyphenyl, polypyrrole, polyaniline, polythiophene, polypyridine, cellulose, starch, protein, epoxy resins, phenolic resins, derivatives of the foregoing materials, cross-linked products of the foregoing materials, and copolymers of the foregoing materials.

**10.** The composite current collector for positive electrode according to any one of claims 1 to 9, wherein the polymer component in the support layer comprises a polyimide, the polyimide comprising either or both of a homobenzene polyimide and a biphenyl polyimide;

optionally, the polymer component in the support layer comprises a biphenyl polyimide;
further optionally, the support layer comprises a biphenyl polyimide with a mass proportion greater than or equal to 50%;
furthermore optionally, the support layer comprises a biphenyl polyimide with a mass proportion greater than or equal to 80%; and
furthermore optionally, the support layer is made of biphenyl polyimide.

**11.** The composite current collector for positive electrode according to any one of claims 1 to 10, wherein the conductive layer comprises a metal material, and optionally the metal material comprises one or more of aluminum and an aluminum alloy.

**12.** A positive electrode plate comprising the composite current collector for positive electrode according to any one of claims 1 to 11.

**13.** A secondary battery comprising at least one of the composite current collector for positive electrode according to any one of claims 1 to 11 and the positive electrode plate according to claim 12.

**14.** An electric apparatus comprising at least one of the composite current collector for positive electrode according to any one of claims 1 to 11, the positive electrode plate according to claim 12, and the secondary battery according to claim 13.

**15.** A preparation method of the composite current collector for positive electrode according to any one of claims 1 to 11, **characterized by** comprising the following step: forming the conductive layer on at least one side of the support layer so as to produce the composite current collector for positive electrode.

16. A preparation method of positive electrode plate, **characterized by** comprising the following steps: applying a positive electrode slurry on at least one side surface of the composite current collector for positive electrode according to any one of claims 1 to 11, followed by drying and cold pressing, to produce the positive electrode plate.

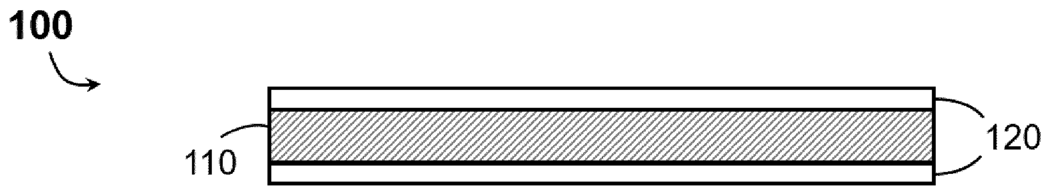


FIG. 1

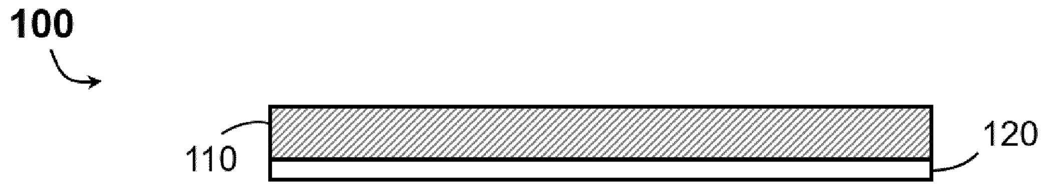


FIG. 2

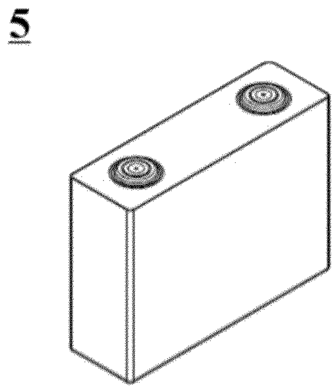


FIG. 3

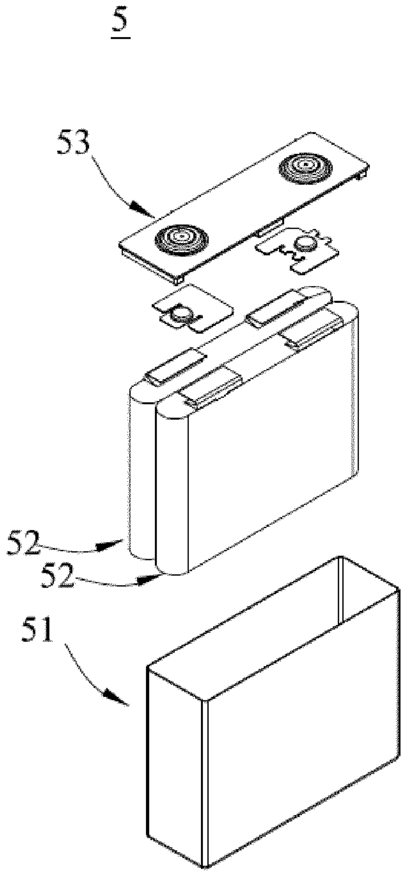


FIG. 4

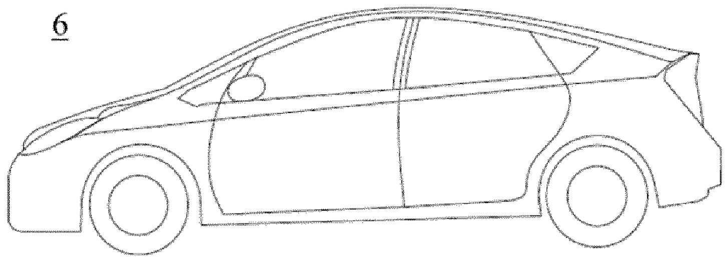


FIG. 5

**INTERNATIONAL SEARCH REPORT**

International application No.
**PCT/CN2023/096874**

**A. CLASSIFICATION OF SUBJECT MATTER**

H01M4/66(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 集电器, 集电体, 集流器, 集流体, 均苯, 联苯, 苯, 聚酰亚胺, 高分子, 有机, 树脂, 塑料, 支撑层, 导电, 金属, 铝, 模量, 强度, 屈服, 应力, 延伸率, 延展率, current w collector, bus, lead, homobenzene, biphenyl, benzene, polyimide, polymer, organic, resin, plastic, support w layer, conductive, metal, aluminum, modulus, strength, yield, stress, elongation

**C. DOCUMENTS CONSIDERED TO BE RELEVANT**

| Category* | Citation of document, with indication, where appropriate, of the relevant passages | Relevant to claim No. |
|---|---|---|
| A | CN 110943227 A (NINGDE CONTEMPORARY AMPEREX TECHNOLOGY CO., LTD.) 31 March 2020 (2020-03-31) description, paragraphs 29-138, 149 and 209 | 1-16 |
| A | CN 103733398 A (UACJ CORP. et al.) 16 April 2014 (2014-04-16) entire document | 1-16 |
| A | CN 115566197 A (YANGZHOU NALI NEW MATERIAL TECHNOLOGY CO., LTD.) 03 January 2023 (2023-01-03) entire document | 1-16 |
| A | JP 2003031224 A (TOYO KOHAN CO., LTD.) 31 January 2003 (2003-01-31) entire document | 1-16 |
| A | JP H01261481 A (TOMOEGAWA PAPER CO., LTD.) 18 October 1989 (1989-10-18) entire document | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 December 2023** | **25 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/096874**

| Patent document cited in search report | Publication date (day/month/year) | Patent family member(s) | Publication date (day/month/year) |
|---|---|---|---|
| CN 110943227 A | 31 March 2020 | EP 3968418 A1 | 16 March 2022 |
| | | EP 3968418 A4 | 24 August 2022 |
| | | US 2022085384 A1 | 17 March 2022 |
| | | WO 2020237714 A1 | 03 December 2020 |
| | | JP 2022531162 A | 06 July 2022 |
| | | JP 7357690 B2 | 06 October 2023 |
| | | KR 20210151170 A | 13 December 2021 |
| | | IN 202117056343 A | 10 December 2021 |
| CN 103733398 A | 16 April 2014 | WO 2013018157 A1 | 07 February 2013 |
| | | EP 2738847 A1 | 04 June 2014 |
| | | EP 2738847 A4 | 10 December 2014 |
| | | EP 2738847 B1 | 22 March 2017 |
| | | KR 20140051319 A | 30 April 2014 |
| | | KR 101907449 B1 | 12 October 2018 |
| | | US 2014255788 A1 | 11 September 2014 |
| | | JPWO 2013018157 A1 | 23 February 2015 |
| | | JP 5791718 B2 | 07 October 2015 |
| CN 115566197 A | 03 January 2023 | None | |
| JP 2003031224 A | 31 January 2003 | None | |
| JP H01261481 A | 18 October 1989 | None | |

Form PCT/ISA/210 (patent family annex) (July 2022)